(19) Europäisches Patentamt
European Patent Office
Office européen des brevets

(11) **EP 4 770 189 A1**

(12) **EUROPEAN PATENT APPLICATION**
published in accordance with Art. 153(4) EPC

(43) Date of publication:
**01.07.2026  Bulletin 2026/27**

(21) Application number: **24864703.4**

(22) Date of filing: **12.09.2024**

(51) International Patent Classification (IPC):
***H04W 28/06*** (2009.01)

(52) Cooperative Patent Classification (CPC):
**H04L 5/00; H04W 28/06; H04W 84/12**

(86) International application number:
**PCT/CN2024/118526**

(87) International publication number:
**WO 2025/055989 (20.03.2025 Gazette 2025/12)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **14.09.2023  CN 202311194755**

(71) Applicant: **HUAWEI TECHNOLOGIES CO., LTD.
Shenzhen 518129 (CN)**

(72) Inventors:
• **GONG, Bo
  Shenzhen, Guangdong 518129 (CN)**

• **ZHOU, Zhengchun
  Chengdu, Sichuan 611756 (CN)**
• **YANG, Yang
  Chengdu, Sichuan 611756 (CN)**
• **LIU, Chenchen
  Shenzhen, Guangdong 518129 (CN)**
• **GAN, Ming
  Shenzhen, Guangdong 518129 (CN)**

(74) Representative: **Maiwald GmbH
Engineering
Elisenhof
Elisenstrasse 3
80335 München (DE)**

(54) **COMMUNICATION METHOD AND APPARATUS**

(57)     Disclosed are a communication method and apparatus, which are applied to wireless local area network systems supporting IEEE 802.11 series protocols such as a next-generation Wi-Fi protocol of 802.11ax, for example, 802.11be, Wi-Fi 7, or EHT, a next generation of 802.11be, for example, 802.11bn or Wi-Fi 8, 802.11ay, and 802.11aj, and can also be applied to UWB-based wireless personal area network systems, sensing (sensing) systems, and the like. A first communication apparatus generates and sends a PPDU. A second communication apparatus receives and parses the PPDU. Pilot values carried on pilot subcarriers corresponding to a data field in the PPDU are determined based on a bandwidth of the PPDU and Nss groups of initial pilot values. At least two groups of initial pilot values in the Nss groups of initial pilot values are different. Each group of initial pilot values may include M initial pilot values. Utilization of a processing circuit is effectively improved.

FIG. 2

## Description

This application claims priority to Chinese Patent Application No. 202311194755.5, filed with the China National Intellectual Property Administration on September 14, 2023 and entitled "COMMUNICATION METHOD AND APPARATUS", which is incorporated herein by reference in its entirety.

## TECHNICAL FIELD

This application relates to the field of communication technologies, and in particular, to a communication method and apparatus.

## BACKGROUND

From 802.11a/g to 802.11n, 802.11ac, 802.11ax, 802.11be, and the like, a wireless local area network (wireless local area network, WLAN) uses a frequency band from 2.4 GHz to 2.4 GHz/5 GHz, and then to 2.4 GHz/5 GHz/6 GHz, and supports a bandwidth expanded from 20 MHz to 320 MHz. The wireless local area network has continuously increasing spectral efficiency and throughputs. A next-generation WLAN technology further improves a physical layer capability of the wireless local area network, and introduces a millimeter-wave band like 45 GHz/60 GHz.

802.11ay is a protocol applicable to a high frequency. There are four pilot quantities in the protocol: 16, 36, 56, and 76. In the protocol, pilot values for each stream may be obtained by connecting a 16-element sequence and a 12-element sequence, and the pilot value sequences are orthogonal between streams.

However, a multi-stream pilot generation manner in the 802.11ay protocol causes low utilization of a processing circuit.

## SUMMARY

Embodiments of this application provide a communication method and apparatus, which can effectively improve utilization of a processing circuit.

According to a first aspect, an embodiment of this application provides a communication method. The method is applied to a first communication apparatus. The first communication apparatus may include a WLAN device, a chip or functional module disposed in the WLAN device, or the like. The method includes:

generating a physical layer (physical layer, PHY) protocol data unit (PHY protocol data unit, PPDU), where the PPDU includes a data field, pilot values carried on pilot subcarriers corresponding to the data field are determined based on a bandwidth for transmitting the PPDU and Nss groups of initial pilot values, at least two groups of initial pilot values in the Nss groups of initial pilot values are different, each group of initial pilot values in the Nss groups of initial pilot values includes M initial pilot values, M is greater than 6, a value of Nss is the same as a total quantity of spatial streams used to transmit the PPDU, and Nss is a positive integer; and sending the PPDU.

In embodiments of this application, when sending the PPDU, the first communication apparatus may determine, by using the Nss groups of initial pilot values and the bandwidth of the PPDU, the pilot values carried on the pilot subcarriers corresponding to the data field in the PPDU. Each group of initial pilot values includes M initial pilot values. M is greater than 6. In this way, the first communication apparatus obtains the pilot values of the data field in a generation manner similar to that of a low-band PPDU, to effectively improve utilization of a processing circuit. For example, when the first communication apparatus sends the PPDU in a high band, the high-band PPDU can reuse a baseband of the low-band PPDU, to further improve the utilization of the processing circuit (for example, the baseband).

According to a second aspect, an embodiment of this application provides a communication method. The method is applied to a second communication apparatus. The second communication apparatus may include a WLAN device, a chip or functional module disposed in the WLAN device, or the like. The method includes:

receiving a physical layer protocol data unit PPDU, where the PPDU includes a data field, pilot values carried on pilot subcarriers corresponding to the data field are determined based on a bandwidth for transmitting the PPDU and Nss groups of initial pilot values, at least two groups of initial pilot values in the Nss groups of initial pilot values are different, each group of initial pilot values in the Nss groups of initial pilot values includes M initial pilot values, M is greater than 6, a value of Nss is the same as a total quantity of spatial streams used to transmit the PPDU, and Nss is a positive integer; and parsing the PPDU.

According to a third aspect, an embodiment of this application provides a communication method. The method is applied to a first communication apparatus. The first communication apparatus may include a WLAN device, a chip or functional module disposed in the WLAN device, or the like. The method includes:

generating a physical layer protocol data unit PPDU, where the PPDU includes a data field, pilot values carried on pilot subcarriers corresponding to the data field are determined based on a bandwidth for transmitting the PPDU and Nss spatial streams for transmitting the PPDU, a pilot value carried on each spatial stream in the Nss spatial streams corresponds to a pilot value carried on each pilot subcarrier in M pilot subcarriers, and M is an integer greater than 6; and sending the PPDU. Alternatively, the foregoing communication method may be described from the following aspect: generating a physical layer protocol data unit PPDU, where the PPDU includes a data field, pilot values carried on pilot subcarriers corresponding to the data field are determined based on a bandwidth for transmitting the PPDU and M pilot subcarriers in the bandwidth, a pilot value carried on each pilot subcarrier in the M pilot subcarriers corresponds to a pilot value carried on each spatial stream in Nss spatial streams for transmitting the PPDU, and M is greater than 6; and sending the PPDU.

According to a fourth aspect, an embodiment of this application provides a communication method. The method is applied to a second communication apparatus. The second communication apparatus may include a WLAN device, a chip or functional module disposed in the WLAN device, or the like. The method includes:

receiving a physical layer protocol data unit PPDU, where the PPDU includes a data field, pilot values carried on pilot subcarriers corresponding to the data field are determined based on a bandwidth for transmitting the PPDU and Nss spatial streams for transmitting the PPDU, and a pilot value carried on each spatial stream in the Nss spatial streams corresponds to a pilot value carried on each pilot subcarrier in M pilot subcarriers; and parsing the PPDU. Alternatively, the foregoing communication method may be described from the following aspect: receiving a physical layer protocol data unit PPDU, where the PPDU includes a data field, pilot values carried on pilot subcarriers corresponding to the data field are determined based on a bandwidth for transmitting the PPDU and M pilot subcarriers in the bandwidth, a pilot value carried on each pilot subcarrier in the M pilot subcarriers corresponds to a pilot value carried on each spatial stream in Nss spatial streams for transmitting the PPDU, and M is greater than 6; and parsing the PPDU.

With reference to the foregoing aspects, in a possible implementation, M = 8, 12, 16, 20, or 24.

With reference to the foregoing aspects, in a possible implementation, Nss is a positive integer less than or equal to 8.

With reference to the foregoing aspects, in a possible implementation, a value of M varies when the bandwidth for transmitting the PPDU varies.

With reference to the foregoing aspects, in a possible implementation, when M = 8, the Nss groups of initial pilot values are Nss groups of initial pilot values indicated by Nss rows in 8 rows shown in the following table:

| iss | $\Psi_{iss,0}$ | $\Psi_{iss,1}$ | $\Psi_{iss,2}$ | $\Psi_{iss,3}$ | $\Psi_{iss,4}$ | $\Psi_{iss,5}$ | $\Psi_{iss,6}$ | $\Psi_{iss,7}$ |
|---|---|---|---|---|---|---|---|---|
| X1 | 1 | -1 | 1 | 1 | 1 | -1 | 1 | 1 |
| X2 | 1 | 1 | -1 | 1 | 1 | 1 | -1 | 1 |
| X3 | 1 | 1 | 1 | -1 | 1 | 1 | 1 | -1 |
| X4 | -1 | 1 | 1 | 1 | -1 | 1 | 1 | 1 |
| X5 | 1 | -1 | 1 | 1 | -1 | 1 | -1 | -1 |
| X6 | 1 | 1 | -1 | 1 | -1 | -1 | 1 | -1 |
| X7 | 1 | 1 | 1 | -1 | -1 | -1 | -1 | 1 |
| X8 | -1 | 1 | 1 | 1 | 1 | -1 | -1 | -1 |

Each row in the table represents a group of initial pilot values. $\Psi_{iss,0}$ to $\Psi_{iss,7}$ sequentially represent initial pilot values of a 1st pilot subcarrier to an 8th pilot subcarrier in 8 pilot subcarriers corresponding to a spatial stream whose index is iss. A value of iss is any one of X1, X2, X3, X4, X5, X6, X7, or X8.

With reference to the foregoing aspects, in a possible implementation, when M = 8, the Nss groups of initial pilot values are Nss groups of initial pilot values indicated by Nss rows in 8 rows shown in the following table:

| iss | $\Psi_{iss,0}$ | $\Psi_{iss,1}$ | $\Psi_{iss,2}$ | $\Psi_{iss,3}$ | $\Psi_{iss,4}$ | $\Psi_{iss,5}$ | $\Psi_{iss,6}$ | $\Psi_{iss,7}$ |
|---|---|---|---|---|---|---|---|---|
| X1 | -1 | 1 | 1 | 1 | 1 | -1 | 1 | 1 |
| X2 | -1 | -1 | -1 | 1 | 1 | 1 | -1 | 1 |
| X3 | -1 | -1 | 1 | -1 | 1 | 1 | 1 | -1 |
| X4 | 1 | -1 | 1 | 1 | -1 | 1 | 1 | 1 |
| X5 | -1 | 1 | 1 | 1 | -1 | 1 | -1 | -1 |
| X6 | -1 | -1 | -1 | 1 | -1 | -1 | 1 | -1 |

(continued)

| iss | $\Psi_{iss,0}$ | $\Psi_{iss,1}$ | $\Psi_{iss,2}$ | $\Psi_{iss,3}$ | $\Psi_{iss,4}$ | $\Psi_{iss,5}$ | $\Psi_{iss,6}$ | $\Psi_{iss,7}$ |
|---|---|---|---|---|---|---|---|---|
| X7 | -1 | -1 | 1 | -1 | -1 | -1 | -1 | 1 |
| X8 | 1 | -1 | 1 | 1 | 1 | -1 | -1 | -1 |

Each row in the table represents a group of initial pilot values. $\Psi_{iss,0}$ to $\Psi_{iss,7}$ sequentially represent initial pilot values of a 1st pilot subcarrier to an 8th pilot subcarrier in 8 pilot subcarriers corresponding to a spatial stream whose index is iss. A value of iss is any one of X1, X2, X3, X4, X5, X6, X7, or X8.

With reference to the foregoing aspects, in a possible implementation, when M = 12, the Nss groups of initial pilot values are Nss groups of initial pilot values indicated by Nss rows in 8 rows shown in the following table:

| iss | $\Psi_{iss,0}$ | $\Psi_{iss,1}$ | $\Psi_{iss,2}$ | $\Psi_{iss,3}$ | $\Psi_{iss,4}$ | $\Psi_{iss,5}$ | $\Psi_{iss,6}$ | $\Psi_{iss,7}$ | $\Psi_{iss,8}$ | $\Psi_{iss,9}$ | $\Psi_{iss,10}$ | $\Psi_{iss,11}$ |
|---|---|---|---|---|---|---|---|---|---|---|---|---|
| X1 | -1 | -1 | 1 | 1 | -1 | 1 | -1 | 1 | 1 | 1 | 1 | -1 |
| X2 | -1 | 1 | -1 | 1 | 1 | 1 | -1 | 1 | -1 | -1 | -1 | -1 |
| X3 | -1 | -1 | -1 | -1 | -1 | -1 | -1 | 1 | 1 | -1 | -1 | 1 |
| X4 | -1 | 1 | 1 | -1 | 1 | 1 | 1 | 1 | 1 | 1 | -1 | 1 |
| X5 | -1 | 1 | -1 | 1 | 1 | -1 | -1 | -1 | 1 | 1 | 1 | 1 |
| X6 | -1 | -1 | -1 | -1 | 1 | 1 | 1 | -1 | 1 | -1 | 1 | -1 |
| X7 | -1 | -1 | 1 | -1 | 1 | -1 | -1 | -1 | -1 | 1 | -1 | -1 |
| X8 | -1 | 1 | 1 | 1 | -1 | -1 | 1 | -1 | 1 | -1 | -1 | -1 |

Each row in the table represents a group of initial pilot values. $\Psi_{iss,0}$ to $\Psi_{iss,11}$ sequentially represent initial pilot values of a 1st pilot subcarrier to a 12th pilot subcarrier in 12 pilot subcarriers corresponding to a spatial stream whose index is iss. A value of iss is any one of X1, X2, X3, X4, X5, X6, X7, or X8.

With reference to the foregoing aspects, in a possible implementation, when M = 16, the Nss groups of initial pilot values are Nss groups of initial pilot values indicated by Nss rows in 8 rows shown in the following table:

| iss | $\Psi_{iss,0}$ | $\Psi_{iss,1}$ | $\Psi_{iss,2}$ | $\Psi_{iss,3}$ | $\Psi_{iss,4}$ | $\Psi_{iss,5}$ | $\Psi_{iss,6}$ | $\Psi_{iss,7}$ | $\Psi_{iss,8}$ | $\Psi_{iss,9}$ | $\Psi_{iss,10}$ | $\Psi_{iss,11}$ | $\Psi_{iss,12}$ | $\Psi_{iss,13}$ | $\Psi_{iss,14}$ | $\Psi_{iss,15}$ |
|---|---|---|---|---|---|---|---|---|---|---|---|---|---|---|---|---|
| X1 | 1 | 1 | 1 | 1 | 1 | 1 | 1 | 1 | 1 | 1 | 1 | 1 | 1 | 1 | 1 | 1 |
| X2 | -1 | 1 | 1 | -1 | 1 | -1 | 1 | -1 | 1 | -1 | 1 | -1 | 1 | -1 | 1 | -1 |
| X3 | 1 | 1 | -1 | -1 | 1 | 1 | -1 | -1 | 1 | 1 | -1 | -1 | 1 | 1 | -1 | -1 |
| X4 | -1 | 1 | -1 | 1 | 1 | -1 | -1 | 1 | 1 | -1 | -1 | 1 | 1 | -1 | -1 | 1 |
| X5 | 1 | 1 | 1 | 1 | -1 | -1 | -1 | -1 | 1 | 1 | 1 | 1 | -1 | -1 | -1 | -1 |
| X6 | -1 | 1 | 1 | -1 | -1 | 1 | -1 | 1 | 1 | -1 | 1 | -1 | -1 | 1 | -1 | 1 |
| X7 | -1 | 1 | -1 | 1 | -1 | 1 | 1 | 1 | 1 | -1 | -1 | 1 | -1 | 1 | 1 | -1 |
| X8 | -1 | 1 | 1 | -1 | -1 | 1 | -1 | 1 | -1 | 1 | -1 | 1 | 1 | -1 | 1 | -1 |

Each row in the table represents a group of initial pilot values. $\Psi_{iss,0}$ to $\Psi_{iss,15}$ sequentially represent initial pilot values of a 1st pilot subcarrier to a 16th pilot subcarrier in 16 pilot subcarriers corresponding to a spatial stream whose index is iss. A value of iss is any one of X1, X2, X3, X4, X5, X6, X7, or X8.

With reference to the foregoing aspects, in a possible implementation, when M = 20, the Nss groups of initial pilot values are Nss groups of initial pilot values indicated by Nss rows in 8 rows shown in the following table:

| iss | $\Psi_{iss,0}$ | $\Psi_{iss,1}$ | $\Psi_{iss,2}$ | $\Psi_{iss,3}$ | $\Psi_{iss,4}$ | $\Psi_{iss,5}$ | $\Psi_{iss,6}$ | $\Psi_{iss,7}$ | $\Psi_{iss,8}$ | $\Psi_{iss,9}$ | $\Psi_{iss,10}$ | $\Psi_{iss,11}$ | $\Psi_{iss,12}$ | $\Psi_{iss,13}$ | $\Psi_{iss,14}$ | $\Psi_{iss,15}$ | $\Psi_{iss,16}$ | $\Psi_{iss,17}$ | $\Psi_{iss,18}$ | $\Psi_{iss,19}$ |
|---|---|---|---|---|---|---|---|---|---|---|---|---|---|---|---|---|---|---|---|---|
| X1 | -1 | 1 | -1 | -1 | 1 | -1 | 1 | -1 | 1 | 1 | 1 | 1 | -1 | -1 | 1 | -1 | -1 | 1 | 1 | -1 |

| iss | $\Psi_{iss,0}$ | $\Psi_{iss,1}$ | $\Psi_{iss,2}$ | $\Psi_{iss,3}$ | $\Psi_{iss,4}$ | $\Psi_{iss,5}$ | $\Psi_{iss,6}$ | $\Psi_{iss,7}$ | $\Psi_{iss,8}$ | $\Psi_{iss,9}$ | $\Psi_{iss,10}$ | $\Psi_{iss,11}$ | $\Psi_{iss,12}$ | $\Psi_{iss,13}$ | $\Psi_{iss,14}$ | $\Psi_{iss,15}$ | $\Psi_{iss,16}$ | $\Psi_{iss,17}$ | $\Psi_{iss,18}$ | $\Psi_{iss,19}$ |
|---|---|---|---|---|---|---|---|---|---|---|---|---|---|---|---|---|---|---|---|---|
| X2 | -1 | 1 | 1 | -1 | 1 | -1 | 1 | 1 | 1 | 1 | -1 | -1 | 1 | -1 | -1 | 1 | 1 | -1 | -1 | -1 |
| X3 | 1 | 1 | -1 | 1 | -1 | 1 | 1 | 1 | 1 | -1 | -1 | 1 | -1 | -1 | 1 | 1 | -1 | -1 | -1 | -1 |
| X4 | -1 | 1 | 1 | -1 | 1 | 1 | 1 | -1 | -1 | 1 | -1 | -1 | 1 | 1 | -1 | -1 | -1 | -1 | 1 | 1 |
| X5 | 1 | 1 | -1 | 1 | 1 | 1 | -1 | -1 | 1 | -1 | -1 | 1 | -1 | -1 | -1 | -1 | 1 | -1 | | |
| X6 | 1 | 1 | 1 | -1 | -1 | 1 | -1 | -1 | 1 | 1 | -1 | -1 | -1 | -1 | 1 | -1 | 1 | -1 | 1 | 1 |
| X7 | -1 | 1 | -1 | 1 | -1 | -1 | 1 | 1 | -1 | -1 | -1 | -1 | 1 | -1 | 1 | -1 | 1 | 1 | 1 | 1 |
| X8 | 1 | 1 | -1 | -1 | 1 | 1 | -1 | -1 | -1 | -1 | 1 | -1 | 1 | -1 | 1 | 1 | 1 | 1 | -1 | -1 |

Each row in the table represents a group of initial pilot values. $\Psi_{iss,0}$ to $\Psi_{iss,19}$ sequentially represent initial pilot values of a 1st pilot subcarrier to a 20th pilot subcarrier in 20 pilot subcarriers corresponding to a spatial stream whose index is iss. A value of iss is any one of X1, X2, X3, X4, X5, X6, X7, or X8.

With reference to the foregoing aspects, in a possible implementation, when M = 24, the Nss groups of initial pilot values are Nss groups of initial pilot values indicated by Nss rows in 8 rows shown in the following table:

| iss | $\Psi_{iss,0}$ | $\Psi_{iss,1}$ | $\Psi_{iss,2}$ | $\Psi_{iss,3}$ | $\Psi_{iss,4}$ | $\Psi_{iss,5}$ | $\Psi_{iss,6}$ | $\Psi_{iss,7}$ | $\Psi_{iss,8}$ | $\Psi_{iss,9}$ | $\Psi_{iss,10}$ | $\Psi_{iss,11}$ | $\Psi_{iss,12}$ | $\Psi_{iss,13}$ | $\Psi_{iss,14}$ | $\Psi_{iss,15}$ | $\Psi_{iss,16}$ | $\Psi_{iss,17}$ | $\Psi_{iss,18}$ | $\Psi_{iss,19}$ | $\Psi_{iss,20}$ | $\Psi_{iss,21}$ | $\Psi_{iss,22}$ | $\Psi_{iss,23}$ |
|---|---|---|---|---|---|---|---|---|---|---|---|---|---|---|---|---|---|---|---|---|---|---|---|---|
| X1 | -1 | 1 | 1 | 1 | 1 | 1 | -1 | 1 | -1 | -1 | -1 | 1 | 1 | 1 | 1 | -1 | 1 | -1 | -1 | 1 | 1 | -1 | 1 | 1 |
| X2 | -1 | -1 | -1 | -1 | 1 | 1 | 1 | -1 | -1 | -1 | -1 | -1 | 1 | -1 | -1 | 1 | 1 | -1 | 1 | -1 | 1 | -1 | 1 | -1 |
| X3 | -1 | 1 | 1 | -1 | 1 | -1 | 1 | -1 | 1 | 1 | -1 | 1 | 1 | 1 | 1 | 1 | 1 | 1 | 1 | -1 | -1 | 1 | 1 | 1 |
| X4 | -1 | 1 | -1 | -1 | 1 | -1 | -1 | 1 | -1 | 1 | 1 | -1 | -1 | -1 | 1 | -1 | -1 | -1 | 1 | -1 | -1 | -1 | 1 | 1 |
| X5 | -1 | 1 | 1 | 1 | 1 | 1 | -1 | 1 | -1 | -1 | -1 | 1 | -1 | -1 | -1 | 1 | -1 | 1 | 1 | -1 | -1 | 1 | -1 | -1 |
| X6 | -1 | -1 | 1 | 1 | 1 | 1 | 1 | 1 | 1 | 1 | 1 | -1 | -1 | 1 | -1 | 1 | -1 | 1 | -1 | -1 | 1 | -1 | 1 | 1 |
| X7 | -1 | 1 | -1 | 1 | -1 | 1 | -1 | -1 | 1 | 1 | -1 | -1 | -1 | -1 | 1 | 1 | 1 | 1 | 1 | 1 | 1 | -1 | -1 | 1 |
| X8 | -1 | -1 | -1 | -1 | 1 | 1 | 1 | -1 | -1 | -1 | -1 | -1 | -1 | 1 | 1 | -1 | -1 | 1 | -1 | 1 | -1 | 1 | -1 | 1 |

Each row in the table represents a group of initial pilot values. $\Psi_{iss,0}$ to $\Psi_{iss,23}$ sequentially represent initial pilot values of a 1st pilot subcarrier to a 24th pilot subcarrier in 24 pilot subcarriers corresponding to a spatial stream whose index is iss. A value of iss is any one of X1, X2, X3, X4, X5, X6, X7, or X8.

With reference to the foregoing aspects, in a possible implementation, when M = 24, the Nss groups of initial pilot values are Nss groups of initial pilot values indicated by Nss rows in 8 rows shown in the following table:

| iss | $\Psi_{iss,0}$ | $\Psi_{iss,1}$ | $\Psi_{iss,2}$ | $\Psi_{iss,3}$ | $\Psi_{iss,4}$ | $\Psi_{iss,5}$ | $\Psi_{iss,6}$ | $\Psi_{iss,7}$ | $\Psi_{iss,8}$ | $\Psi_{iss,9}$ | $\Psi_{iss,10}$ | $\Psi_{iss,11}$ | $\Psi_{iss,12}$ | $\Psi_{iss,13}$ | $\Psi_{iss,14}$ | $\Psi_{iss,15}$ | $\Psi_{iss,16}$ | $\Psi_{iss,17}$ | $\Psi_{iss,18}$ | $\Psi_{iss,19}$ | $\Psi_{iss,20}$ | $\Psi_{iss,21}$ | $\Psi_{iss,22}$ | $\Psi_{iss,23}$ |
|---|---|---|---|---|---|---|---|---|---|---|---|---|---|---|---|---|---|---|---|---|---|---|---|---|
| X1 | 1 | -1 | 1 | -1 | -1 | 1 | -1 | 1 | -1 | -1 | -1 | 1 | 1 | 1 | -1 | 1 | 1 | -1 | -1 | 1 | 1 | 1 | 1 | 1 |
| X2 | -1 | 1 | -1 | -1 | 1 | 1 | 1 | -1 | 1 | -1 | -1 | -1 | 1 | -1 | -1 | 1 | 1 | 1 | 1 | -1 | 1 | 1 | 1 | 1 |
| X3 | -1 | 1 | -1 | 1 | -1 | -1 | 1 | 1 | -1 | -1 | -1 | 1 | -1 | -1 | 1 | -1 | -1 | -1 | -1 | -1 | 1 | 1 | 1 | 1 |
| X4 | -1 | 1 | 1 | -1 | 1 | -1 | -1 | -1 | 1 | 1 | -1 | -1 | -1 | 1 | -1 | -1 | -1 | -1 | -1 | 1 | -1 | 1 | 1 | 1 |
| X5 | 1 | 1 | -1 | -1 | -1 | -1 | 1 | -1 | -1 | 1 | 1 | -1 | 1 | 1 | 1 | -1 | 1 | -1 | 1 | 1 | 1 | 1 | -1 | 1 |
| X6 | -1 | -1 | -1 | -1 | 1 | 1 | 1 | 1 | 1 | -1 | 1 | 1 | -1 | 1 | 1 | 1 | -1 | -1 | 1 | 1 | -1 | 1 | -1 | 1 |
| X7 | 1 | 1 | 1 | 1 | 1 | -1 | -1 | 1 | 1 | -1 | 1 | 1 | 1 | -1 | -1 | -1 | 1 | -1 | 1 | -1 | -1 | 1 | -1 | 1 |
| X8 | 1 | 1 | 1 | -1 | -1 | 1 | -1 | -1 | -1 | -1 | 1 | -1 | -1 | -1 | 1 | 1 | -1 | 1 | -1 | -1 | -1 | 1 | -1 | 1 |

Each row in the table represents a group of initial pilot values. $\Psi_{iss,0}$ to $\Psi_{iss,23}$ sequentially represent initial pilot values of a 1st pilot subcarrier to a 24th pilot subcarrier in 24 pilot subcarriers corresponding to a spatial stream whose index is iss. A value of iss is any one of X1, X2, X3, X4, X5, X6, X7, or X8.

With reference to the foregoing aspects, in a possible implementation, the pilot values carried on the pilot subcarriers corresponding to the data field are determined based on the bandwidth for transmitting the PPDU, the Nss groups of initial pilot values, and an index of an orthogonal frequency division multiplexing (orthogonal frequency division multiplexing, OFDM) symbol included in the data field.

According to a fifth aspect, an embodiment of this application provides a first communication apparatus, configured to perform the method according to the first aspect or any possible implementation. The first communication apparatus includes a module that performs the method according to the first aspect, the third aspect, or any possible implementation.

According to a sixth aspect, an embodiment of this application provides a second communication apparatus, configured to perform the method according to the second aspect or any possible implementation. The second communication apparatus includes a module that performs the method according to the second aspect, the fourth aspect, or any possible implementation.

According to a seventh aspect, an embodiment of this application provides a first communication apparatus. The first communication apparatus includes a processor, configured to perform the method according to the first aspect, the third aspect, or any possible implementation. The processor is configured to execute a program stored in a memory. When the program is executed, the method according to the first aspect or any possible implementation is performed.

In a possible implementation, the memory is located outside the first communication apparatus.

In a possible implementation, the memory is located inside the first communication apparatus.

In embodiments of this application, the processor and the memory may alternatively be integrated into one device. In other words, the processor and the memory may alternatively be integrated together. For example, the first communication apparatus may be a chip.

In a possible implementation, the first communication apparatus further includes a transceiver. The transceiver is configured to receive information or send information (for example, a PPDU).

According to an eighth aspect, an embodiment of this application provides a second communication apparatus. The second communication apparatus includes a processor, configured to perform the method according to the second aspect, the fourth aspect, or any possible implementation. The processor is configured to execute a program stored in a memory. When the program is executed, the method according to the second aspect, the fourth aspect, or any possible implementation is performed.

In a possible implementation, the memory is located outside the second communication apparatus.

In a possible implementation, the memory is located inside the second communication apparatus.

In embodiments of this application, the processor and the memory may alternatively be integrated into one device. In other words, the processor and the memory may alternatively be integrated together. For example, the second communication apparatus may be a chip.

In a possible implementation, the second communication apparatus further includes a transceiver. The transceiver is configured to receive information (for example, a PPDU) or send information.

According to a ninth aspect, an embodiment of this application provides a first communication apparatus. The first communication apparatus includes a logic circuit and an interface. The logic circuit is coupled to the interface. The interface is configured to input and/or output information. The logic circuit is configured to perform the method according to the first aspect, the third aspect, or any possible implementation.

In a possible implementation, that the interface is configured to output the information includes: the interface is configured to output a PPDU. For example, the logic circuit is configured to generate the PPDU.

According to a tenth aspect, an embodiment of this application provides a second communication apparatus. The second communication apparatus includes a logic circuit and an interface. The logic circuit is coupled to the interface. The interface is configured to input and/or output information. The logic circuit is configured to perform the method according to the second aspect, the fourth aspect, or any possible implementation.

In a possible implementation, that the interface is configured to input the information includes: the interface is configured to input a PPDU. For example, the logic circuit is configured to parse the PPDU.

According to an eleventh aspect, an embodiment of this application provides a computer-readable storage medium. The computer-readable storage medium is configured to store a computer program. When the computer program is run on a computer, the method according to the first aspect, the second aspect, the third aspect, the fourth aspect, or any possible implementation is performed.

According to a twelfth aspect, an embodiment of this application provides a computer program product. The computer program product includes a computer program or computer code. When the computer program or the computer code is run on a computer, the method according to the first aspect, the second aspect, the third aspect, the fourth aspect, or any possible implementation is performed.

According to a thirteenth aspect, an embodiment of this application provides a computer program. When the computer program is run on a computer, the method according to the first aspect, the second aspect, the third aspect, the fourth aspect, or any possible implementation is performed.

According to a fourteenth aspect, an embodiment of this application provides a communication system. The communication system includes a first communication apparatus and a second communication apparatus.

In a possible implementation, the first communication apparatus is configured to perform the method according to the first aspect or any possible implementation of the first aspect, and the second communication apparatus is configured to perform the method according to the second aspect or any possible implementation of the second aspect.

In a possible implementation, the first communication apparatus is configured to perform the method according to the third aspect or any possible implementation of the third aspect, and the second communication apparatus is configured to perform the method according to the fourth aspect or any possible implementation of the fourth aspect.

## BRIEF DESCRIPTION OF DRAWINGS

FIG. 1 is a diagram of an architecture of a communication system according to an embodiment of this application;
FIG. 2 is a schematic flowchart of a communication method according to an embodiment of this application;
FIG. 3a is a diagram of a format of a UHR PPDU according to an embodiment of this application;
FIG. 3b is a diagram of a format of an IMMW PPDU according to an embodiment of this application;
FIG. 4a is a diagram of distribution of pilot subcarriers according to an embodiment of this application;
FIG. 4b is another diagram of distribution of pilot subcarriers according to an embodiment of this application;
FIG. 4c is still another diagram of distribution of pilot subcarriers according to an embodiment of this application;
FIG. 4d is yet another diagram of distribution of pilot subcarriers according to an embodiment of this application;
FIG. 4e is still yet another diagram of distribution of pilot subcarriers according to an embodiment of this application;
FIG. 5 is a diagram of a structure of a communication apparatus according to an embodiment of this application;
FIG. 6 is a diagram of a structure of another communication apparatus according to an embodiment of this application; and
FIG. 7 is a diagram of a structure of still another communication apparatus according to an embodiment of this application.

## DESCRIPTION OF EMBODIMENTS

For ease of understanding technical solutions of this application, the following further describes this application with reference to accompanying drawings.

Terms "first", "second", and the like in the specification, claims, and accompanying drawings of this application are merely used to distinguish between different objects, and are not used to describe a specific order. In addition, terms such as "include" and "have" and any other variants thereof are intended to cover a non-exclusive inclusion. For example, processes, methods, systems, products, devices, or the like that include a series of steps or units are not limited to the listed steps or units, but optionally further include unlisted steps, units, or the like, or optionally further include other steps or units inherent to these processes, methods, products, devices, or the like.

"Embodiments" mentioned herein mean that specific features, structures, or characteristics described in combination with the embodiments may be included in at least one embodiment of this application. The phrase shown in various locations in the specification may not necessarily refer to a same embodiment, and is not an independent or optional embodiment exclusive from another embodiment. It may be understood explicitly and implicitly by a person skilled in the art that the embodiments described herein may be combined with other embodiments.

In this application, "at least one (item)" means one or more, "a plurality of" means two or more, "at least two (items)" means two or three or more, and "and/or" is used to describe an association relationship between associated objects, which indicates that three relationships may exist. For example, "A and/or B" may indicate: only A exists, only B exists, and both A and B exist. A and B may be singular or plural. "Or" indicates that two relationships may exist, for example, only A exists and only B exists. When A and B are not mutually exclusive, it may indicate that three relationships exist, for example, only A exists, only B exists, and both A and B exist. The character "/" generally indicates an "or" relationship between associated objects. "At least one of the following items (pieces)" or a similar expression thereof means any combination of these items. For example, at least one of a, b, or c may represent: a, b, c, "a and b", "a and c", "b and c", or "a, b, and c".

Embodiments of this application provide a communication method and apparatus, which can effectively improve utilization of a processing circuit (for example, a baseband). A manner of generating pilot values carried on pilot subcarriers corresponding to a data field in a PPDU in embodiments of this application is nearly consistent with a manner of generating pilot values carried on pilot subcarriers corresponding to a data field in a low-band PPDU (for example, a PPDU transmitted in a low band), so that a circuit for processing the PPDU shown in embodiments of this application can effectively reuse a circuit for processing the low-band PPDU, to improve the utilization of the processing circuit. Further, when the PPDU shown in embodiments of this application is transmitted in a high band, the high-band PPDU can reuse the circuit for processing the low-band PPDU, to improve the utilization of the processing circuit.

The following describes a communication system in embodiments of this application.

The technical solutions provided in embodiments of this application may be applied to a WLAN system, for example, Wi-Fi. For example, the method provided in embodiments of this application may be applied to IEEE 802.11 series protocols, such as the 802.11be protocol, the 802.11bn protocol, or a next-generation protocol of the 802.11bn protocol. Examples are not enumerated herein. The technical solutions provided in embodiments of this application may be further applied to a wireless personal area network (wireless personal area network, WPAN) based on millimeter wave (millimeter wave, MMW) and ultra wideband (ultra wideband, UWB) technologies. For example, the method provided in embodiments of this application may be applied to IEEE 802.15 series protocols, such as the 802.15.4a protocol, the 802.15.4z protocol, the 802.15.4ab protocol, or a future-generation UWB WPAN protocol. Examples are not enumerated herein. The technical solutions provided in embodiments of this application may be further applied to the following communication systems, for example, an internet of things (internet of things, IoT) system, a vehicle to X (vehicle to X, V2X) system, a narrow band internet of things (narrow band internet of things, NB-IoT) system, a long term evolution (long term evolution, LTE) system, a 5th-generation (5th-generation, 5G) communication system, and a new communication system emerging in future communication development.

The WLAN system can provide high-rate and low-latency transmission. With continuous evolution of WLAN application scenarios, the WLAN system is to be applied to more scenarios or industries, for example, the internet of things industry, the internet of vehicles industry, the banking industry, enterprise offices, stadiums and exhibition halls, concert halls, hotel rooms, dormitories, hospital wards, classrooms, shopping malls and supermarkets, squares, streets, production workshops, and warehouses. Certainly, a device (for example, an access point or a station) that supports WLAN communication or sensing may be a sensor node (for example, a smart water meter, a smart electricity meter, or a smart air detection node) in a smart city, a smart device (for example, a smart camera, a projector, a display, a television, a speaker, a refrigerator, or a washing machine) in a smart home, a node in the internet of things, an entertainment terminal (for example, a wearable device such as augmented reality (augmented reality, AR) or virtual reality (virtual reality, VR)), a smart device (for example, a printer, a projector, a loudspeaker, or a speaker) in a smart office, an internet of vehicles device in the internet of vehicles, an infrastructure (for example, a vending machine, a self-service navigation console in a shopping mall or supermarket, a self-service cashier, or a self-service ordering machine) in a daily life scenario, a device in a large sports and music venue, or the like.

Although embodiments of this application mainly use a WLAN as an example, especially a network applied to IEEE 802.11 series standards, embodiments of this application may support Wi-Fi 8, which may also be referred to as ultra-high reliability (ultra high reliability, UHR) or ultra-high reliability and throughput (ultra high reliability and throughput, UHRT). Examples are not enumerated herein. Various aspects in embodiments of this application may be extended to other networks that use various standards or protocols, for example, Bluetooth (Bluetooth), a high performance radio LAN (high performance radio LAN, HIPERLAN) (a wireless standard similar to the IEEE 802.11 standard, and mainly used in Europe), a wide area network (WAN), or other networks known or developed in the future.

In a possible implementation, the method provided in embodiments of this application may be implemented by a communication apparatus in a communication system. For example, the communication apparatus may be an access point (access point, AP) or a station (station, STA).

The AP is an apparatus having a wireless communication function, supports communication or sensing by using a WLAN protocol, has a function of communicating with or sensing another device (for example, a non-AP STA or another access point) in a WLAN, and certainly may further have a function of communicating with or sensing another device. Alternatively, the access point is equivalent to a bridge that connects a wired network and a wireless network. A main function of the access point is to connect various wireless network clients together and then connect the wireless network to the Ethernet. In a WLAN system, the access point may be referred to as an access point station (AP STA). The apparatus having the wireless communication function may be an entire device, or may be a chip, a processing system, a functional module, or the like installed in an entire device. The device in which the chip, the processing system, or the functional module is installed may implement a method, a function, and the like in embodiments of this application under control of the chip, the processing system, or the functional module. The AP in embodiments of this application is an apparatus that provides a service for the non-AP STA, and may support the 802.11 series protocols or subsequent protocols, or the like. For example, the access point may be an access point for a terminal (for example, a mobile phone) to access a wired (or wireless) network, and is mainly deployed at home, inside a building, and inside a campus. A typical coverage radius is tens of meters to over one hundred meters. Certainly, the access point may alternatively be deployed outdoors. For another example, the AP may be a communication entity, for example, a communication server, a router, a switch, or a bridge, or the AP may include various forms of macro base stations, micro base stations, relay stations, and the like. Certainly, the AP may alternatively be a chip, a processing system, or a module in the foregoing devices in various forms, to implement a method and a function in embodiments of this application.

The STA is an apparatus having a wireless communication function, supports communication or sensing by using a WLAN protocol, and has a capability of communicating with or sensing another non-AP STA or access point in a WLAN. In a WLAN system, the station may be referred to as a non-access point station (non-access point station, non-AP STA). For example, the STA is any user communication device that allows a user to communicate with or sense the AP and then communicate with the WLAN. The apparatus having the wireless communication function may be an entire device, or may be a chip, a processing system, a functional module, or the like installed in an entire device. The device in which the chip, the processing system, or the functional module is installed may implement a method and a function in embodiments of this application under control of the chip, the processing system, or the functional module. For example, the STA may be a wireless communication chip, a wireless sensor, a wireless communication terminal, or the like, and may also be referred to as a user. For another example, the STA may be a mobile phone supporting a Wi-Fi communication function, a tablet computer supporting a Wi-Fi communication function, a set-top box supporting a Wi-Fi communication function, a smart television supporting a Wi-Fi communication function, an intelligent wearable device supporting a Wi-Fi communication function, a vehicle-mounted communication device supporting a Wi-Fi communication function, a computer supporting a Wi-Fi communication function, or the like. Certainly, the STA may alternatively be a chip, a processing system, or a module in the foregoing devices in various forms, to implement a method and a function in embodiments of this application.

For example, a communication system to which the method provided in embodiments of this application may be applied may include an access point and a station. For example, embodiments of this application may be applied to a scenario of communication or sensing between an AP and a STA, between APs, or between STAs in a WLAN. This is not limited in embodiments of this application. Optionally, the AP may communicate with or sense a single STA, or the AP may simultaneously communicate with or sense a plurality of STAs. Specifically, communication or sensing between the AP and the plurality of STAs may be classified into downlink transmission in which the AP simultaneously sends signals to the plurality of STAs and uplink transmission in which the plurality of STAs send signals to the AP. A WLAN communication protocol may be supported between an AP and a STA, between APs, or between STAs. The communication protocol may include IEEE 802.11 series protocols, for example, the 802.11n/802.11ac/802.11ax/802.11be/802.11bn protocol. Certainly, protocols subsequent to 802.11bn may also be supported.

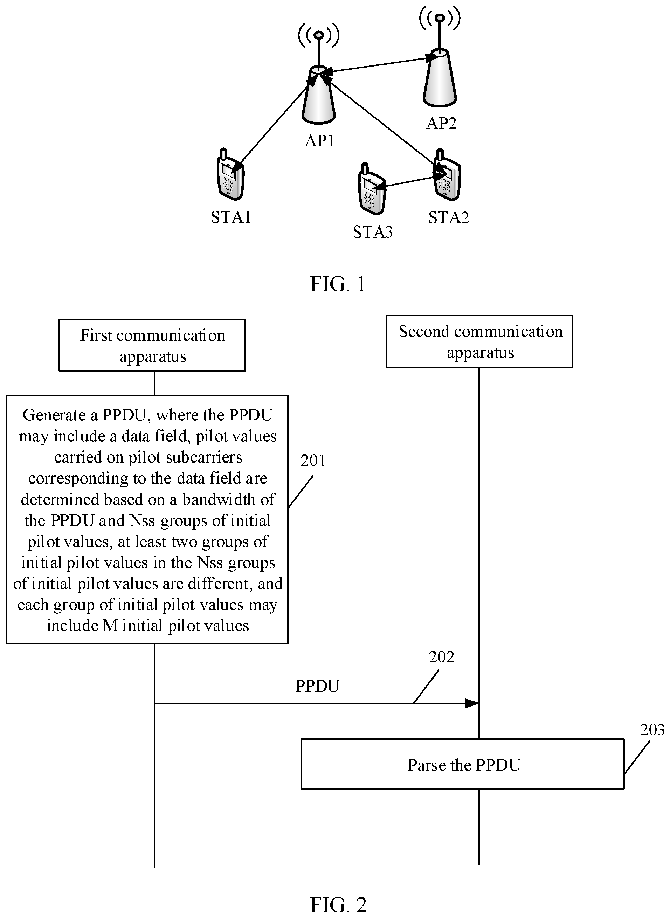

FIG. 1 is a diagram of an architecture of a communication system according to an embodiment of this application. The communication system may include one or more APs and one or more STAs. FIG. 1 shows one access point AP1 and three stations STA1, STA2, and STA3. For example, the method provided in embodiments of this application may be applied to data communication between one AP and one or more STAs (for example, communication between AP1 and STA1 or communication of AP1 with STA1 and STA2 shown in FIG. 1), communication between APs (for example, communication between AP2 and AP1 shown in FIG. 1), or communication between STAs (for example, communication between STA2 and STA3 shown in FIG. 1). The method provided in embodiments of this application may be applied to but not limited to single-user uplink/downlink transmission, multi-user uplink/downlink transmission, vehicle-to-everything (vehicle-to-everything, V2X, where X may represent everything), and device-to-device (device-to-device, D2D). For example, the V2X may include vehicle-to-vehicle (vehicle-to-vehicle, V2V), vehicle-to-infrastructure (vehicle-to-infrastructure, V2I), vehicle-to-pedestrian (vehicle-to-pedestrian, V2P) communication, or vehicle-to-network (vehicle-to-network, V2N) communication.

It can be understood that in FIG. 1, an example in which the STA is a mobile phone and the AP is a router is used. This does not mean that types of the AP and the STA in embodiments of this application are limited. In addition, FIG. 1 shows only one AP and three STAs as an example. There may be more or less APs or STAs. This is not limited in embodiments of this application.

From different perspectives of sending a PPDU and receiving a PPDU, in the following content, a first communication apparatus may be understood as a communication apparatus that sends a PPDU, and a second communication apparatus may be understood as a communication apparatus that receives a PPDU. In an example, the first communication apparatus and the second communication apparatus may be Wi-Fi chips, functional modules, processing systems, or the like disposed in different Wi-Fi devices. In another example, the first communication apparatus may be an AP, and the second communication apparatus may be a STA. In another example, both the first communication apparatus and the second communication apparatus may be STAs or APs. In another example, the first communication apparatus may be a STA, and the second communication apparatus may be an AP. In another example, at least one of the first communication apparatus and the second communication apparatus may be a multi-link device (multi-link device, MLD) or the like. Examples are not enumerated in embodiments of this application. For example, the multi-link device (multi-link device, MLD) means that the device simultaneously has a plurality of stations (for example, APs or non-AP STAs), which operate on different frequency bands or channels. The multi-link device includes a plurality of affiliated stations. The affiliated stations may be physical stations, or may be logical stations. Each station may operate on one link, one frequency band, one channel, or the like. The affiliated station may be an AP or a non-AP STA. The multi-link device (for example, a non-AP MLD or an AP MLD) may be a communication apparatus having a wireless communication function. The communication apparatus may be an entire device, or may be a chip, a processing system, a module, or the like installed in an entire device. The device in which the chip, the processing system, or the module is installed may implement a method and a function in embodiments of this application under control of the chip, the processing system, or the module. The multi-link device may implement wireless communication in compliance with 802.11 series protocols, to communicate with another device. The another device may be a multi-link device, or may not be a multi-link device. Frequency bands on which the multi-link device operates may include but are not limited to sub 1 GHz, 2.4 GHz, 5 GHz, 6 GHz, and the like. Examples are not enumerated herein.

It may be understood that in embodiments of this application, the method provided in embodiments of this application is described by using two sides: the first communication apparatus and the second communication apparatus. However, in a process in which the first communication apparatus and the second communication apparatus transmit a PPDU, the PPDU may be further forwarded through another apparatus, such as forwarding the PPDU between the first communication apparatus and the second communication apparatus through a forwarding apparatus. An apparatus other than the first communication apparatus and the second communication apparatus is not limited in embodiments of this application.

FIG. 2 is a schematic flowchart of a communication method according to an embodiment of this application. For related descriptions of a first communication apparatus and a second communication apparatus in the method, refer to FIG. 1. Details are not described herein again. As shown in FIG. 2, the method includes the following steps.

201: The first communication apparatus generates a PPDU. The PPDU may include a data field. Pilot values carried on pilot subcarriers corresponding to the data field are determined based on a bandwidth of the PPDU and Nss groups of initial pilot values. At least two groups of initial pilot values in the Nss groups of initial pilot values are different. Each group of initial pilot values may include M initial pilot values.

In time domain, the PPDU may occupy one or more orthogonal frequency division multiplexing (orthogonal frequency division multiplexing, OFDM) symbols. Each OFDM symbol may correspond to one symbol index. The PPDU may include a preamble field and the data field. The data field occupies n OFDM symbols. For example, an index of a $1^{st}$ OFDM symbol in the data field may be 0, an index of a $2^{nd}$ OFDM symbol may be 1, and so on. That the indexes listed herein of the OFDM symbols occupied by the data field start from 0 is merely an example. For example, the symbol indexes may alternatively start from 1 or the like. This is not limited in embodiments of this application. $n = 0, 1, ..., N_{SYM} - 1$. A total quantity of the OFDM symbols occupied by the data field is $N_{SYM}$. $N_{SYM}$ is a positive integer. During specific implementation, the OFDM symbol may also be referred to as a symbol for short, and the index of the OFDM symbol may also be referred to as a symbol index for short. The index of the OFDM symbol occupied by the data field may also be referred to as an index of a data symbol or the like for short. Other names of the foregoing terms are not limited in embodiments of this application.

In frequency domain, a bandwidth for transmitting the PPDU may include a plurality of subcarriers. The plurality of subcarriers may include a data subcarrier, a pilot subcarrier, a direct current subcarrier, and a guard subcarrier. The bandwidth for transmitting the PPDU may be related to a subcarrier spacing and a quantity of subcarriers. For example, bandwidth for transmitting the PPDU = subcarrier spacing $\times$ quantity of subcarriers. For example, if the quantity of subcarriers is 128 and the subcarrier spacing is 2.5 MHz, the bandwidth for transmitting the PPDU is $128 \times 2.5$ MHz = 320 MHz. For another example, if the quantity of subcarriers is 128 and the subcarrier spacing is 5 MHz, the bandwidth for transmitting the PPDU is $128 \times 5$ MHz = 640 MHz. For another example, if the quantity of subcarriers is 256 and the subcarrier spacing is 2.5 MHz, the bandwidth for transmitting the PPDU is $256 \times 2.5$ MHz = 640 MHz. Other values for the quantity of subcarriers and the subcarrier spacing are not enumerated in embodiments of this application. As a standard progresses, a bandwidth used to transmit a high-frequency PPDU may be larger or have more values. This is not limited in embodiments of this application.

Based on the foregoing descriptions of the time domain and the frequency domain, for the data field, each OFDM symbol in the data field may correspond to a data subcarrier, a pilot subcarrier, a direct current subcarrier, and a guard subcarrier. The bandwidth for transmitting the PPDU may also be referred to as the bandwidth of the PPDU, an effective bandwidth for transmitting the PPDU, an effective bandwidth used to transmit the PPDU, or the like, which are not enumerated herein. For example, the quantity of subcarriers may be equal to an inverse discrete Fourier transform (inverse discrete fourier transform, IDFT) size (IDFT size) or a discrete Fourier transform (discrete fourier transform, DFT) size. The IDFT size may be a quantity of points of inverse discrete Fourier transform. The DFT size may be a quantity of points of discrete Fourier transform.

In spatial domain (or referred to as space domain), each spatial stream for transmitting the PPDU may correspond to the plurality of subcarriers. Each spatial stream for transmitting the PPDU may correspond to all subcarriers in the bandwidth of the PPDU. Each subcarrier may carry data of all spatial streams. Based on the foregoing descriptions of the spatial stream and the quantity of subcarriers, if a total quantity of subcarriers included in the bandwidth of the PPDU is N, each spatial stream may correspond to N subcarriers. For example, a value of Nss may be the same as a total quantity of spatial streams for transmitting the PPDU. If the N subcarriers include M pilot subcarriers, each pilot subcarrier in the M pilot subcarriers may carry pilot values on Nss spatial streams. The data field corresponds to the M pilot subcarriers, and each pilot subcarrier may carry Nss pilot values. Therefore, the data field may correspond to Nss $\times$ M pilot values. Nss is a positive integer. M is greater than 6.

In embodiments of this application, the spatial stream is used as an example for description. During specific implementation, the PPDU may alternatively be transmitted through different space-time streams. Based on a relationship between the space-time stream and the spatial stream, the method provided in embodiments of this application is also applicable to a case in which the PPDU is transmitted through different space-time streams. When the PPDU is transmitted through different space-time streams, for related descriptions of the pilot values carried on the pilot subcarriers corresponding to the data field, adaptively refer to the following content.

In embodiments of this application, the pilot values carried on the pilot subcarriers corresponding to the data field may be determined based on the bandwidth of the PPDU and the Nss groups of initial pilot values. The details are as follows:

At least two groups of initial pilot values in the Nss groups of initial pilot values are different. For example, in the Nss groups of initial pilot values, a group of initial pilot values is different from another group of initial pilot values. For example, if M initial pilot values in a group of initial pilot values are represented as a sequence including M elements, the Nss groups of initial pilot values may correspond to Nss sequences, and any two sequences in the Nss sequences are different. Each group of initial pilot values may correspond to one spatial stream. In embodiments of this application, multi-stream pilots may be used, to support independent phase offset estimation for each spatial stream. Pilot values carried on the pilot subcarriers corresponding to the data field for the spatial streams are different. Different groups of initial pilot values are used for different spatial streams. Phase offset estimation may be separately performed for each spatial stream, so that accuracy of phase offset estimation can be improved for more accurate phase offset correction, to improve data demodulation accuracy and reduce a packet error rate.

Each group of initial pilot values may include M initial pilot values. A value of M may be related to the bandwidth of the PPDU. Generally, if the total quantity N of subcarriers varies, the M pilot subcarriers in the N subcarriers also vary. For example, if the bandwidth of the PPDU is different, a value of N may be different, and thus the value of M may be different. For example, for a same subcarrier spacing, if the bandwidth of the PPDU is different, the value of N is different, and thus the value of M is different. For another example, for a same value of Nss and a same subcarrier spacing, Nss groups of initial pilot values when the bandwidth of the PPDU is x may be different from Nss groups of initial pilot values when the bandwidth of the PPDU is y. Both x and y are positive integers. Specific values of x and y are not limited in embodiments of this application.

For example, M = 8, 12, 16, 20, or 24. M listed herein is a total quantity of pilot subcarriers in the bandwidth of the PPDU. Specific values of N are not enumerated herein. For example, the bandwidth of the PPDU is 160 MHz or 320 MHz, and M = 8. For another example, the bandwidth of the PPDU is 320 MHz or 640 MHz, and M = 12. For another example, the bandwidth of the PPDU is 640 MHz or 1280 MHz, and M = 16. For another example, the bandwidth of the PPDU is 1280 MHz or 2560 MHz, and M = 20 or M = 24. Examples are not enumerated herein.

The pilot values carried on the pilot subcarriers corresponding to the data field may correspond to pilot values carried on the pilot subcarriers for each spatial stream in the Nss spatial streams. For example, if M pilot values are carried on the pilot subcarriers for each spatial stream, Nss $\times$ M pilot values are carried on the pilot subcarriers for the Nss spatial streams, and Nss $\times$ M pilot values are carried on the pilot subcarriers corresponding to the data field. Alternatively, the pilot values carried on the pilot subcarriers corresponding to the data field may correspond to pilot values on the Nss spatial streams and carried by each pilot subcarrier in the M pilot subcarriers. For example, if each pilot subcarrier carries pilot values on the Nss spatial streams, M $\times$ Nss pilot values are carried on the M pilot subcarriers, and Nss $\times$ M pilot values are carried on the pilot subcarriers corresponding to the data field.

The following describes a process of generating the pilot values carried on the pilot subcarriers for each spatial stream. A process of generating the pilot values carried on the pilot subcarriers may be related to initial pilot values, a scrambling manner, and a shift manner. The details are as follows:

M initial pilot values corresponding to different streams may be shown in a formula (1):

$$\Psi_{iss,0}, \ \Psi_{iss,1}, \ \Psi_{iss,2}, \ \Psi_{iss,3}, ..., \ \Psi_{iss,M} \ (1)$$

iss represents an index of the spatial stream. M represents a quantity of pilot subcarriers. Different values of iss may represent different spatial stream indexes. Different spatial stream indexes may correspond to different groups of initial pilot values.

The pilot values carried on the pilot subcarriers corresponding to the data field are determined based on the bandwidth of the PPDU, the Nss groups of initial pilot values, and an index of an OFDM symbol included in the data field. For example, for an $n^{th}$ OFDM symbol in the data field, the pilot values carried on the pilot subcarriers may be shown in a formula (2):

$$[\Psi_{iss,n \bmod M} \quad \Psi_{iss,(n+1) \bmod M} \quad \Psi_{iss,(n+2) \bmod M} \quad \Psi_{iss,(n+3) \bmod M} \cdots \Psi_{iss,(n+M-1) \bmod M}] \ (2)$$

A relationship between the index n of the OFDM symbol and the total quantity M of pilot subcarriers shown in the formula (2) may be a shift manner of the pilot values. Alternatively, a relationship among the index n of the OFDM symbol, the total quantity M of pilot subcarriers, and the spatial stream index iss shown in the formula (2), and Nss may be a shift manner of the pilot values.

For example, M = 12. For a $1^{st}$ spatial stream (for example, iss = 1), pilot values of the $1^{st}$ OFDM symbol (n = 0) in the data field are shown in a formula (3):

$$[\Psi_{1,0 \bmod 12} \quad \Psi_{1,1 \bmod 12} \quad \Psi_{1,2 \bmod 12} \quad \Psi_{1,3 \bmod 12} \cdots \Psi_{1,11 \bmod 12}] \ (3)$$

The formula (3) may also be equivalent to a formula (4):

$$[\Psi_{1,0} \quad \Psi_{1,1} \quad \Psi_{1,2} \quad \Psi_{1,3} \cdots \Psi_{1,11}] \ (4)$$

For a $2^{nd}$ spatial stream (iss = 1), pilot values of the $1^{st}$ OFDM symbol in the data field may be shown in a formula (5):

$$[\Psi_{2,0} \quad \Psi_{2,1} \quad \Psi_{2,2} \quad \Psi_{2,3} \cdots \Psi_{2,11}] \ (5)$$

The rest may be deduced by analogy and are not enumerated herein.

It can be learned from the formulas (4) and (5) that pilot values carried on different spatial streams are different even for a same OFDM symbol. For descriptions of the initial pilot values, refer to Table 3 to Table 10 below. Details are not described herein.

For the $1^{st}$ spatial stream, pilot values of the $2^{nd}$ OFDM symbol (n = 1) in the data field may be shown in a formula (6):

$$[\Psi_{1,1 \bmod 12} \quad \Psi_{1,2 \bmod 12} \quad \Psi_{1,3 \bmod 12} \quad \Psi_{1,4 \bmod 12} \cdots \Psi_{1,12 \bmod 12}] \ (6)$$

The formula (6) may also be equivalent to a formula (7):

$$[\Psi_{1,1} \quad \Psi_{1,2} \quad \Psi_{1,3} \quad \Psi_{1,4} \cdots \Psi_{1,11} \ \Psi_{1,0}] \ (7)$$

It can be learned from the formulas (1), (4), and (7) that for a same spatial stream, initial pilot values used by different OFDM symbols are the same, but pilot values carried on different OFDM symbols are different.

After the pilot values on the pilot subcarriers corresponding to the data field are determined, the pilot values on the pilot subcarriers may be further scrambled. For example, the first communication apparatus may scramble the pilot values based on a p-sequence. A scrambling manner may be as follows: The pilot values are multiplied by $p_{n+K}$. When a 1st element in the p-sequence is $p_0$, $p_{n+K}$ represents an $(n + K + 1)$th element in the p-sequence. A value of K is related to a quantity of OFDM symbols occupied by a preamble part in the PPDU. For example, the value of K may be related to a quantity of OFDM symbols occupied by a SIG field in the PPDU. For example, the value of K may be related to a total quantity of OFDM symbols occupied by an L-SIG field and a first SIG field in the PPDU. The first SIG field may be related to a specific format of the PPDU in each standard. For example, the first SIG field may be a UHR-SIG field, an IMMW-SIG field, an EHT-SIG field, a VHT-SIG field, or the like, which are not enumerated herein. For example, if the total quantity of OFDM symbols occupied by the L-SIG field and the first SIG field in the PPDU is 4, K may be equal to 4. The following uses K = 4 as an example for description when a specific example is used.

For example, the p-sequence is a cyclic extension sequence including 127 elements. For example, $p_{0...126}$ = {1, 1, 1, 1, -1, -1, -1, 1, -1, -1, -1, -1, 1, 1, -1, 1, -1, -1, 1, 1, -1, 1, 1, -1, 1, 1, 1, 1, 1, 1, -1, 1, 1, 1, -1, 1, 1, -1, -1, 1, 1, 1, -1, 1, -1, -1, -1, 1, -1, 1, -1, -1, 1, -1, -1, 1, 1, 1, 1, 1, -1, -1, 1, 1, -1, -1, 1, -1, 1, -1, 1, 1, -1, -1, -1, 1, 1, -1, -1, -1, -1, 1, -1, -1, 1, -1, 1, 1, 1, 1, -1, 1, -1, 1, -1, -1, -1, -1, -1, 1, -1, 1, 1, -1, 1, -1, 1, 1, 1, -1, -1, 1, -1, -1, -1, 1, 1, 1, -1, -1, -1, -1, -1, -1, -1}. The p-sequence shown herein is merely an example. As the standard progresses, the p-sequence may change, and a sequence (and an $(n + 5)$th element in the p-sequence) used to scramble the pilot values on the pilot subcarriers may change. Therefore, the foregoing p-sequence should not be understood as a limitation on embodiments of this application.

The foregoing formulas (4) and (7) are used as an example. For the 1st spatial stream, pilot values carried on M pilot subcarriers corresponding to the 1st OFDM symbol (n = 0) in the data field are $[\Psi_{1,0}\ \Psi_{1,1}\ \Psi_{1,2}\ \Psi_{1,3} \ldots \Psi_{1,11}] \times p_4$. Pilot values carried on M pilot subcarriers corresponding to the 2nd OFDM symbol (n = 1) in the data field are $[\Psi_{1,1}\ \Psi_{1,2}\ \Psi_{1,3}\ \Psi_{1,4} \ldots \Psi_{1,11}\ \Psi_{1,0}] \times p_5$. Pilot values carried on M pilot subcarriers corresponding to a 3rd OFDM symbol (n = 2) is $[\Psi_{1,2}\ \Psi_{1,3}\ \Psi_{1,4}\ \Psi_{1,5} \ldots \Psi_{1,0}\ \Psi_{1,1}] \times p_6$. The rest may be deduced by analogy and are not enumerated herein.

In an example, step 201 may alternatively be described from the following aspect: The pilot values carried on the pilot subcarriers corresponding to the data field may be determined based on the bandwidth of the PPDU and the Nss spatial streams for transmitting the PPDU. The pilot value carried on each spatial stream corresponds to the pilot value carried on each pilot subcarrier in the M pilot subcarriers.

In another example, step 201 may alternatively be described from the following aspect: The pilot values carried on the pilot subcarriers corresponding to the data field may be determined based on the bandwidth of the PPDU and the M pilot subcarriers in the bandwidth of the PPDU. The pilot value carried on each pilot subcarrier in the M pilot subcarriers corresponds to the pilot value on each spatial stream in the Nss spatial streams for transmitting the PPDU.

In still another example, step 201 may alternatively be described from the following aspect: The pilot values carried on the pilot subcarriers corresponding to the data field are determined based on the bandwidth of the PPDU, Nss spatial streams for transmitting the PPDU, and the M pilot subcarriers in the bandwidth of the PPDU.

A manner of describing the M initial pilot values shown in the formula (1), the bandwidth of the PPDU, the Nss spatial streams, and the pilot values carried on the pilot subcarriers corresponding to the data field are not limited in embodiments of this application. Any pilot values carried on the pilot subcarriers corresponding to the data field and determined based on the foregoing formulas (1) to (7) and related content of the p-sequence fall within the protection scope of embodiments of this application.

The foregoing shows a manner of generating the pilot subcarriers corresponding to the data field in the PPDU. A manner of generating a data subcarrier corresponding to the data field is not limited in embodiments of this application.

The following shows examples of a format of the PPDU.

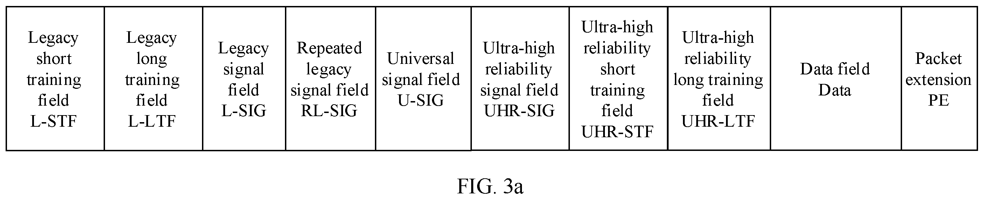

FIG. 3a is a diagram of a format of a UHR PPDU according to an embodiment of this application. As shown in FIG. 3a, the UHR PPDU may include at least one of a legacy short training field (legacy short training field, L-STF), a legacy long training field (legacy long training field, L-LTF), a legacy signal (legacy signal, L-SIG) field, a repeated legacy signal (repeated L-SIG, RL-SIG) field, a universal signal (universal signal, U-SIG) field, a UHR-SIG field, a UHR-STF, a UHR-LTF, a data (data) field, or a packet extension (packet extension, PE) field. For example, the L-STF may be used for PPDU discovery, coarse synchronization, automatic gain control, and the like. The L-LTF may be used for fine synchronization, channel estimation, and the like. The L-SIG and RL-SIG fields may be used to carry information related to a PPDU length. Repetition of the two fields is further used for automatic detection of the second communication apparatus. The U-SIG field may carry signaling used to demodulate subsequent data. The UHR-SIG field may be used to carry signaling used to demodulate subsequent data. The UHR-STF may be used for automatic gain control of a subsequent field. The UHR-LTF may be used for channel estimation. The data field may be used to carry data information. The PE field may be used to increase processing time of a receiver.

The foregoing specific descriptions of the fields are merely examples. During specific implementation, the fields may alternatively have more or fewer functions, or the like. This is not limited in embodiments of this application.

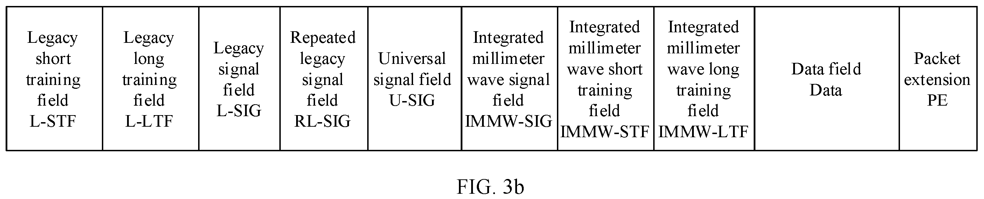

The PPDU shown in embodiments of this application is applicable to a millimeter-wave band, for example, applicable to the IMMW standard, and the PPDU may be referred to as an IMMW PPDU or an IMMW MU PPDU. FIG. 3b is a diagram of a format of an IMMW PPDU according to an embodiment of this application. As shown in FIG. 3b, the IMMW PPDU may include at least one of an L-STF, an L-LTF, an L-SIG field, an RL-SIG field, a U-SIG field, an IMMW-SIG field, an IMMW-STF, an IMMW-LTF, a data field, or a PE field. For specific descriptions of the fields, refer to FIG. 3a. Details are not described herein again.

The fields included in the UHR PPDU shown in FIG. 3a and the IMMW PPDU shown in FIG. 3b and sequences of the fields are merely examples, and should not be understood as a limitation on embodiments of this application.

For example, the UHR-LTF or the IMMW-LTF in the PPDU shown in embodiments of this application may not be configured with a pilot. In embodiments of this application, a data part in the PPDU may use multi-stream pilots to perform independent phase offset estimation for each spatial stream. An LTF part in the PPDU is not configured with a pilot, that is, phase offset estimation and correction are not performed. For an LTF with a small length, a workload of a receive end can be reduced, and a channel estimation error is not excessively increased when no pilot is configured.

202: The first communication apparatus sends the PPDU. Correspondingly, the second communication apparatus receives the PPDU.

In an example, the first communication apparatus may send the PPDU in a high band. The high band may be a frequency band between 42.5 GHz and 71 GHz, or a frequency band greater than or equal to (super) 45 GHz. A specific frequency band value related to the high band is not limited in embodiments of this application.

In another example, the first communication apparatus may alternatively send the PPDU in a low band. Examples are not enumerated herein.

203: The second communication apparatus parses the PPDU.

For example, the second communication apparatus detects (detect) a legacy preamble part (fields before the U-SIG field shown in FIG. 3a and FIG. 3b) in the PPDU, to obtain a standard to which the PPDU belongs. For example, the second communication apparatus may obtain, based on the legacy preamble part, a frame format or the like corresponding to the PPDU, or that the PPDU is a UHR PPDU, an IMMW PPDU, or the like. By detecting preamble parts (for example, including the legacy preamble part and a UHR-related preamble part) in the PPDU, the second communication apparatus can effectively demodulate the data field in the PPDU. A specific manner of describing step 203 is not limited in embodiments of this application. For example, step 203 may alternatively be described from the following aspect: The second communication apparatus detects the PPDU, the second communication apparatus processes the PPDU, the second communication apparatus detects and demodulates the PPDU, or the like.

For example, when parsing the PPDU, the second communication apparatus may learn, from a SIG field in the PPDU, the quantity Nss of spatial streams for transmitting the PPDU. For example, the SIG field may include a U-SIG field, a first SIG field, or the like. The first SIG field may include a UHR-SIG field, an IMMW-SIG field, or the like. A specific position or name of the first SIG field is not limited in embodiments of this application. For example, the second communication apparatus may further perform phase offset estimation by using Nss groups of initial pilot values stored in the second communication apparatus. For example, steps of the phase offset estimation may be as follows: A signal sent by the first communication apparatus may be $Q \times p_{n+K}$. The second communication apparatus obtains a received signal y carried on a pilot subcarrier. Dimensions of the signal may be M $\times$ 1 (which is merely an example and may alternatively be 1 $\times$ M). Then, the second communication apparatus constructs a matrix Q by using Nss sequences (namely, the Nss groups of initial pilot values) stored in the second communication apparatus. Dimensions of the constructed matrix Q may be M $\times$ Nss (which is merely an example and may alternatively be Nss $\times$ M). For example, the signal y received by the second communication apparatus may be shown as follows. $h_1$ to $h_M$ are channel information estimated by the second communication apparatus based on an LTF part. The second communication apparatus calculates a conjugate transpose $Q^H \times y$ of the matrix Q, and then eliminates impact of the channel information and $p_{n+K}$. In this way, a phase offset of each spatial stream can be obtained, such as $\theta_1$ to $\theta_M$ shown in the following formula. The steps of the phase offset estimation shown herein are merely an example. Specific steps of the phase offset estimation are not limited in embodiments of this application. In the following formula, $\boldsymbol{n}_0$ represents noise.

$$\boldsymbol{y} = p_{n+K} \times \begin{bmatrix} \Psi_{1,n\,mod\,M} & \Psi_{2,n\,mod\,M} & \cdots & \Psi_{Nss,n\,mod\,M} \\ \Psi_{1,(n+1)\,mod\,M} & \Psi_{2,(n+1)\,mod\,M} & \cdots & \Psi_{Nss,(n+1)\,mod\,M} \\ \cdots & \cdots & \cdots & \cdots \\ \Psi_{1,(n+M-1)\,mod\,M} & \Psi_{2,(n+M-1)\,mod\,M} & \cdots & \Psi_{Nss,(n+M-1)\,mod\,M} \end{bmatrix} \times \begin{bmatrix} h_1 e^{j\theta_1} \\ h_2 e^{j\theta_2} \\ \cdots \\ h_M e^{j\theta_M} \end{bmatrix} + \boldsymbol{n}_0$$

$$Q = \begin{bmatrix} \Psi_{1,n\,mod\,M} & \Psi_{2,n\,mod\,M} & \cdots & \Psi_{Nss,n\,mod\,M} \\ \Psi_{1,(n+1)\,mod\,M} & \Psi_{2,(n+1)\,mod\,M} & \cdots & \Psi_{Nss,(n+1)\,mod\,M} \\ \cdots & \cdots & \cdots & \cdots \\ \Psi_{1,(n+M-1)\,mod\,M} & \Psi_{2,(n+M-1)\,mod\,M} & \cdots & \Psi_{Nss,(n+M-1)\,mod\,M} \end{bmatrix}$$

In embodiments of this application, when sending the PPDU, the first communication apparatus may determine, by using the Nss groups of initial pilot values and the bandwidth of the PPDU, the pilot values carried on the pilot subcarriers corresponding to the data field. Each group of initial pilot values includes M initial pilot values. M is greater than 6. In this way, the first communication apparatus can obtain the pilot values of the data field in a generation manner similar to that of a low-band PPDU, so that the PPDU shown in embodiments of this application can reuse a baseband of the low-band PPDU, to effectively improve utilization of a processing circuit. For example, when the first communication apparatus sends the PPDU in a high band, the high-band PPDU can reuse the baseband of the low-band PPDU, to further improve the utilization of the processing circuit (for example, the baseband).

That the pilot values of the data field in the PPDU shown in embodiments of this application are obtained in the generation manner similar to that of the low-band PPDU indicates that in both cases, a process of generating the pilot value from an initial pilot value is a process of shifting and scrambling the initial pilot value, and the initial pilot value is shifted and scrambled in a same manner. In embodiments of this application, different initial pilot values are used for the spatial streams.

Currently, multi-stream pilots are also used in the 802.11ay protocol. In the protocol, a pilot value is generated through a phase shift, as shown in a formula (8):

$$P_{N_{sp}}(i_{STS}, n, k) = W(i_{STS}, n \bmod N_{STS}) \times (2 \times p(n) - 1) \times P_{N_{sp}}(i_{STS}, k) \quad (8)$$

$P_{N_{sp}}(i_{STS}, k)$ represents a value of an orthogonal pilot sequence, as shown in Table 1 and Table 2. $N_{sp}$ represents a quantity of pilot subcarriers. k represents a $k^{th}$ pilot subcarrier. $i_{STS}$ represents an index of a spatial stream. $W(i_{STS}, n) \times (2 \times p(n)$ - 1) represents generation of a phase shift. $p(n)$ is a sequence formed by 0 and 1 from a scrambler.

For example, $W(i_{STS}, n)$ is shown in a formula (9):

$$W(i_{STS}, n) = \exp\left(-j\frac{2\pi}{N_{STS}} \times (i_{STS} - 1) \times n\right), i_{STS} = 1, 2, \ldots, N_{STS}; n = 0, 1, \ldots, N_{SYM} - 1 \quad (9)$$

The foregoing formula (9) is related to a quantity of streams and a quantity of symbols. The phase shift randomizes values of the pilot subcarriers, to avoid a circuit implementation problem caused by a spectral line (spectral line).

Table 1

| $N_{CB}$ | $P_{N_{sp}}(i_{STS}, :)$ |
|---|---|
| 1 | $P_{16}(i_{STS}, :)$ |
| 2 | $P_{36}(i_{STS}, :) = [P_{12}(i_{STS}, :), P_{12}(i_{STS}, :), P_{12}(i_{STS}, :)]$ |
| 3 | $P_{56}(i_{STS}, :) = [P_{16}(i_{STS}, :), P_{12}(i_{STS}, :), P_{12}(i_{STS}, :), P_{16}(i_{STS}, :)]$ |
| 4 | $P_{76}(i_{STS}, :) = [P_{16}(i_{STS}, :), P_{16}(i_{STS}, :), P_{12}(i_{STS}, :), P_{16}(i_{STS}, :), P_{16}(i_{STS}, :)]$ |

Table 2

| $i_{STS}$ | $P_{16}(i_{STS}, :)$ | $P_{12}(i_{STS}, :)$ |
|---|---|---|
| 1 | [+1 +1 +1 -1 +1 +1 -1 +1 +1 +1 +1 -1 -1 -1 +1 -1] | [-1 +1 -1 +1 +1 -1 -1 -1 -1 -1 +1 +1] |
| 2 | [-1 -1 -1 +1 -1 -1 +1 -1 +1 +1 +1 -1 -1 -1 +1 - 1] | [+1 -1 +1 +1 -1 -1 -1 -1 -1 +1 +1 - 1] |
| 3 | [-1 -1 -1 +1 +1 +1 -1 +1 -1 -1 -1 +1 -1 -1 +1 - 1] | [-1 +1 +1 -1 -1 -1 -1 +1 +1 -1 +1] |
| 4 | [+1 +1 +1 -1 -1 -1 +1 -1 -1 -1 -1 +1 -1 -1 +1 - 1] | [+1 +1 -1 -1 -1 -1 -1 +1 +1 -1 +1 - 1] |
| 5 | [-1 -1 +1 -1 -1 -1 -1 +1 -1 -1 +1 -1 +1 +1 +1 - 1] | [+1 -1 -1 -1 +1 -1 -1 +1 -1 +1 -1 +1] |
| 6 | [+1 +1 -1 +1 +1 +1 +1 -1 -1 -1 +1 -1 +1 +1 +1 -1] | [-1 -1 +1 -1 -1 -1 +1 +1 -1 -1 +1 +1] |
| 7 | [+1 +1-1 +1 -1 -1 -1 +1 +1 +1 -1 +1 +1 +1 +1 -1] | [-1 -1 -1 +1 -1 +1 -1 +1 +1 +1 +1 +1] |
| 8 | [-1 -1 +1 -1 +1 +1 +1-1 +1 +1 -1 +1 +1 +1 +1 -1] | [-1 -1 -1 -1 +1 -1 +1 -1 +1 +1 +1 - 1] |

It can be learned from the formulas (8) and (9) that pilot values carried on pilot subcarriers corresponding to a data field in a PPDU in the 802.11ay protocol are greatly different from those in a low-frequency protocol, shift manners are completely different, and scrambling manners are also different, thereby preventing reuse of high- and low-frequency circuits.

Currently, a multi-stream pilot mechanism is also used in the 802.11n protocol. For example, a transmission bandwidth is 20 MHz. In the 802.11n protocol, a bandwidth of 20 MHz may include 64 subcarriers. There may be 4 pilot subcarriers in the 64 subcarriers.

Four initial pilot values may be $\Psi_{iss,0}^{Nss}$, $\Psi_{iss,1}^{Nss}$, $\Psi_{iss,2}^{Nss}$, and $\Psi_{iss,3}^{Nss}$. Nss represents a total quantity of streams. iss represents a stream index. For an $n^{th}$ OFDM symbol in a data field, pilot values carried on the pilot subcarriers are $\left[\Psi_{iss,n\ mod\ 4}^{Nss} \quad \Psi_{iss,(n+1)\ mod\ 4}^{Nss} \quad \Psi_{iss,(n+2)\ mod\ 4}^{Nss} \quad \Psi_{iss,(n+3)\ mod\ 4}^{Nss}\right]$.

For example, Nss = 2. For a $2^{nd}$ spatial stream, pilot values of a $1^{st}$ OFDM symbol with an index n = 0 in the data field are $\left[\Psi_{2,0}^{2} \quad \Psi_{2,1}^{2} \quad \Psi_{2,2}^{2} \quad \Psi_{2,3}^{2}\right]$; pilot values of a $2^{nd}$ OFDM symbol with an index n = 1 are $\left[\Psi_{2,1}^{2} \quad \Psi_{2,2}^{2} \quad \Psi_{2,3}^{2} \quad \Psi_{2,0}^{2}\right]$; pilot values of a $3^{rd}$ OFDM symbol with an index n = 2 are $\left[\Psi_{2,2}^{2} \quad \Psi_{2,3}^{2} \quad \Psi_{2,0}^{2} \quad \Psi_{2,1}^{2}\right]$; and so on. After the pilot values are determined, the pilot values may be further scrambled. For example, the pilot values may be further multiplied by $p_{n+4}$. n represents indexes of OFDM symbols. The symbol indexes start from 0. $p_{n+4}$ represents an $(n + 3)^{th}$ element in a p-sequence. The p-sequence is a cyclic extension sequence including 127 elements: $p_{0...126}$ = {1, 1, 1, 1, -1, -1, -1, 1, -1, -1, -1, -1, 1, 1, -1, 1, -1, -1, 1, 1, -1, 1, 1, -1, 1, 1, 1, 1, 1, 1, -1, 1, 1, 1, -1, 1, 1, -1, -1, 1, 1, 1, -1, 1, -1, -1, -1, -1, 1, -1, 1, -1, -1, 1, -1, -1, 1, 1, 1, 1, 1, 1, -1, -1, 1, 1, -1, -1, 1, -1, 1, -1, 1, 1, -1, -1, -1, 1, 1, 1, -1, -1, -1, -1, 1, -1, -1, 1, -1, 1, 1, 1, 1, -1, 1, 1, -1, 1, 1, -1, -1, 1, -1, 1, -1, -1, -1, 1, 1, 1, 1, -1, 1, 1, -1, -1, -1, -1, 1, 1, 1, -1, - 1, -1, -1, -1, -1}. For related descriptions of the p-sequence, refer to step 201 above. Details are not described herein again.

However, in the 802.11n protocol, a quantity of spatial streams is less than or equal to 4, and a quantity of pilot subcarriers is 4 or 6. In a subsequent standard protocol, there are more pilot subcarriers and more spatial streams. In embodiments of this application, initial pilot values are provided when the quantity of spatial streams is greater than 4 and the quantity of pilot subcarriers is greater than 6. In addition, a manner of generating the pilot values carried on the pilot subcarriers corresponding to the data field in embodiments of this application is close to that in a low-frequency protocol, with a same shift manner and a same scrambling manner. In this way, a circuit for processing a low-band PPDU is effectively reused, to improve utilization of the processing circuit. For example, when the method provided in embodiments of this application is applied to a high-frequency protocol, reuse of high- and low-frequency circuits is further implemented, to further improve the utilization of the processing circuit (for example, a baseband).

The following describes in detail the Nss groups of initial pilot values provided in embodiments of this application.

Example 1

Table 3 shows initial pilot values when there are 8 spatial streams and 8 pilot subcarriers.

In an example, a row in Table 3 represents a group of initial pilot values corresponding to each spatial stream, and a column in Table 3 represents 8 initial pilot values on the 8 spatial streams corresponding to one pilot subcarrier.

For example, an index of a spatial stream may correspond to a row index (a sequence number shown in Table 3) in Table 3. A group of initial pilot values corresponding to an index iss of a spatial stream may correspond to initial pilot values indicated by an $iss^{th}$ row in Table 3. In this case, the sequence number shown in Table 3 may alternatively be described as the index iss of the spatial stream. For example, if iss = 2, a group of initial pilot values corresponding to a $2^{nd}$ spatial stream in Nss spatial streams may correspond to initial pilot values indicated by a $2^{nd}$ row (a row index 2 shown in Table 3) in Table 3. When Nss is less than 8, the Nss groups of initial pilot values may be initial pilot values indicated by a $1^{st}$ row to an $Nss^{th}$ row in Table 3. For example, if Nss = 2, two groups of initial pilot values corresponding to the two spatial streams may be a group of initial pilot values shown in the $1^{st}$ row and a group of initial pilot values shown in the $2^{nd}$ row in Table 3. For another example, if Nss = 6, six groups of initial pilot values corresponding to the six spatial streams may be initial pilot values shown in the $1^{st}$ row to the $6^{th}$ row in Table 3. For another example, if Nss = 8, eight groups of initial pilot values corresponding to the eight spatial streams may sequentially correspond to initial pilot values shown in the $1^{st}$ row to the $8^{th}$ row in Table 3. In this example, values of X1 to X8 shown in Table 4 may be sequentially 1 to 8.

The foregoing formulas (4) and (5) are used as an example. If iss = 1, for the $1^{st}$ spatial stream, pilot values carried on pilot subcarriers corresponding to the $1^{st}$ OFDM symbol in the data field may be [1 -1 1 1 1 -1 1 1] (the $1^{st}$ row in Table 3) $\times$ $p_4$. If iss = 2, for the $2^{nd}$ spatial stream, pilot values carried on pilot subcarriers corresponding to the $1^{st}$ OFDM symbol in the data field may be [1 1 -1 1 1 1 -1 1] (the $2^{nd}$ row in Table 3) $\times$ $p_4$. The formula (7) is used as an example. If iss = 1, for the $1^{st}$ spatial stream, pilot values carried on pilot subcarriers corresponding to the $2^{nd}$ OFDM symbol in the data field may be [1 -1 1 1 1 -1 1 1] (the $1^{st}$ row in Table 3) $\times$ $p_5$. For the pilot values carried on the pilot subcarriers corresponding to the data field, refer to the foregoing formulas (1) to (7). Details are not enumerated herein again.

For ease of description, the following uses an example in which indexes of spatial streams are in a one-to-one correspondence with row indexes for description when a specific example is used.

For another example, indexes iss of spatial streams may not sequentially correspond to row indexes in Table 3. For example, a group of initial pilot values corresponding to a 1st spatial stream may be initial pilot values shown in any row in Table 3. A group of initial pilot values corresponding to a 2nd spatial stream may be initial pilot values shown in any one of the other seven rows in Table 3 other than the initial pilot values corresponding to the 1st spatial stream. The rest may be deduced by analogy and are not enumerated herein.

For Table 3, a relationship between each spatial stream and a row is not limited in embodiments of this application. For example, Table 3 may also be described from Table 4. Table 4 is described below.

In another example, a column in Table 3 represents a group of initial pilot values corresponding to each spatial stream, and a row in Table 3 represents 8 initial pilot values on the 8 spatial streams corresponding to one pilot subcarrier. For other descriptions of this example, refer to the foregoing example. Details are not described herein again.

Table 3

| Sequence number | 1 | 2 | 3 | 4 | 5 | 6 | 7 | 8 |
|---|---|---|---|---|---|---|---|---|
| 1 | 1 | -1 | 1 | 1 | 1 | -1 | 1 | 1 |
| 2 | 1 | 1 | -1 | 1 | 1 | 1 | -1 | 1 |
| 3 | 1 | 1 | 1 | -1 | 1 | 1 | 1 | -1 |
| 4 | -1 | 1 | 1 | 1 | -1 | 1 | 1 | 1 |
| 5 | 1 | -1 | 1 | 1 | -1 | 1 | -1 | -1 |
| 6 | 1 | 1 | -1 | 1 | -1 | -1 | 1 | -1 |
| 7 | 1 | 1 | 1 | -1 | -1 | -1 | -1 | 1 |
| 8 | -1 | 1 | 1 | 1 | 1 | -1 | -1 | -1 |

With reference to the foregoing formula (1), when a row in Table 3 represents a group of initial pilot values corresponding to each spatial stream, and a column in Table 3 represents 8 initial pilot values on the 8 spatial streams corresponding to one pilot subcarrier, Table 3 and Table 4 may be considered to be the same. $\Psi_{iss,0}$ to $\Psi_{iss,7}$ sequentially represent initial pilot values of a 1st pilot subcarrier to an 8th pilot subcarrier in 8 pilot subcarriers corresponding to a spatial stream whose index is iss. A value of iss is any one of X1, X2, X3, X4, X5, X6, X7, or X8. X1 may be any value in 1 to 8. X2 may be a value other than X1 in 1 to 8. X3 may be a value other than X1 and X2 in 1 to 8. X4 may be a value other than X1 to X3 in 1 to 8. X5 may be a value other than X1 to X4 in 1 to 8. X6 may be a value other than X1 to X5 in 1 to 8. X7 may be a value other than X1 to X6 in 1 to 8. X8 may be a value other than X1 to X7 in 1 to 8.

For example, values of X1 to X8 may be sequentially 1 to 8. For example, if the index iss of the spatial stream is X1, and X1 = 1, a group of initial pilot values corresponding to a spatial stream index iss = 1 is a group of initial pilot values indicated by a row in which X1 is located in Table 4. The rest may be deduced by analogy and are not enumerated herein.

For example, X1 = 2, X2 = 1, X3 = 3, X4 = 5, X5 = 4, X6 = 6, X7 = 8, and X8 = 8, or the like. Values in 1 to 8 to which X1 to X8 specifically correspond are not limited in embodiments of this application. For example, if the index of the spatial stream is X1, and X1 = 2, a group of initial pilot values corresponding to a spatial stream index iss = 2 is a group of initial pilot values indicated by a row in which X2 is located in Table 4.

Table 4

| iss | $\Psi_{iss,0}$ | $\Psi_{iss,1}$ | $\Psi_{iss,2}$ | $\Psi_{iss,3}$ | $\Psi_{iss,4}$ | $\Psi_{iss,5}$ | $\Psi_{iss,6}$ | $\Psi_{iss,7}$ |
|---|---|---|---|---|---|---|---|---|
| X1 | 1 | -1 | 1 | 1 | 1 | -1 | 1 | 1 |
| X2 | 1 | 1 | -1 | 1 | 1 | 1 | -1 | 1 |
| X3 | 1 | 1 | 1 | -1 | 1 | 1 | 1 | -1 |
| X4 | -1 | 1 | 1 | 1 | -1 | 1 | 1 | 1 |
| X5 | 1 | -1 | 1 | 1 | -1 | 1 | -1 | -1 |
| X6 | 1 | 1 | -1 | 1 | -1 | -1 | 1 | -1 |
| X7 | 1 | 1 | 1 | -1 | -1 | -1 | -1 | 1 |
| X8 | -1 | 1 | 1 | 1 | 1 | -1 | -1 | -1 |

For other descriptions of Table 3 and Table 4, refer to the foregoing formulas (1) to (7). Details are not described herein again.

A P-matrix is reused for the eight groups of initial pilot values shown in Table 3 and Table 4. The P-matrix is an orthogonal matrix. Reusing the P-matrix can not only effectively ensure accuracy of phase offset estimation, but also save storage space, avoid repeated design, and simplify implementation. As the standard progresses, the P-matrix may also change. When the P-matrix changes, a changed P-matrix can also be applied to the pilot subcarriers of the data field. A peak-to-average power ratio (peak to average power ratio, PAPR) is 9.0309 dB when the P-matrix is reused.

For a signal sequence, the PAPR is a ratio of an instantaneous peak power of a signal to an average power of the signal, and may be expressed through the following formula (10):

$$\mathrm{PARP} = 10 \cdot \log_{10}\left(\frac{max(x_i^2)}{mean(x_i^2)}\right) \ (10)$$

$x_i$ represents a time-domain discrete value of a signal in the signal sequence. $max(x_i^2)$ represents a maximum value of a square of the time-domain discrete value in the signal sequence, namely, an instantaneous peak power of the signal. $mean(x_i^2)$ represents an average value of the square of the time-domain discrete value, namely, an average power of the signal.

For related descriptions of the PAPR, refer to the following descriptions of a design principle. Details are not described herein.

Example 2

Table 5 shows initial pilot values when there are 8 spatial streams and 8 pilot subcarriers. A row in Table 5 represents a group of initial pilot values corresponding to each spatial stream. A column in Table 5 represents 8 initial pilot values on the 8 spatial streams corresponding to one pilot subcarrier. $\Psi_{iss,0}$ to $\Psi_{iss,7}$ sequentially represent initial pilot values of a 1st pilot subcarrier to an 8th pilot subcarrier in 8 pilot subcarriers corresponding to a spatial stream whose index is iss. A value of iss is any one of X1, X2, X3, X4, X5, X6, X7, or X8. For specific descriptions of X1 to X8, refer to descriptions of Table 4. Details are not described herein again.

In an example, values of X1 to X8 shown in Table 5 may be sequentially 1 to 8. In other words, a 1st row to an 8th row shown in Table 5 may sequentially correspond to a spatial stream index iss 1 to a spatial stream index iss 8. A group of initial pilot values corresponding to an index iss of a spatial stream may correspond to initial pilot values indicated by an iss th row in Table 5. For example, if the index iss of the spatial stream is X1, and X1 = 1, a group of initial pilot values corresponding to a spatial stream index iss = 1 is a group of initial pilot values indicated by a row in which X1 is located in Table 5. In another example, X1 to X8 may not sequentially correspond to 1 to 8. For example, X1 = 2, X2 = 1, X3 = 3, X4 = 5, X5 = 4, X6 = 6, X7 = 8, and X8 = 8. Details are not described herein again. For example, if the index of the spatial stream is X1, and X1 = 2, a group of initial pilot values corresponding to a spatial stream index iss = 2 is a group of initial pilot values indicated by a row in which X2 is located in Table 5.

For related descriptions of Table 5, refer to Table 4 or Table 3. Details are not described herein again.

Table 5

| iss | $\Psi_{iss,0}$ | $\Psi_{iss,1}$ | $\Psi_{iss,2}$ | $\Psi_{iss,3}$ | $\Psi_{iss,4}$ | $\Psi_{iss,5}$ | $\Psi_{iss,6}$ | $\Psi_{iss,7}$ |
|---|---|---|---|---|---|---|---|---|
| X1 | -1 | 1 | 1 | 1 | 1 | -1 | 1 | 1 |
| X2 | -1 | -1 | -1 | 1 | 1 | 1 | -1 | 1 |
| X3 | -1 | -1 | 1 | -1 | 1 | 1 | 1 | -1 |
| X4 | 1 | -1 | 1 | 1 | -1 | 1 | 1 | 1 |
| X5 | -1 | 1 | 1 | 1 | -1 | 1 | -1 | -1 |
| X6 | -1 | -1 | -1 | 1 | -1 | -1 | 1 | -1 |
| X7 | -1 | -1 | 1 | -1 | -1 | -1 | -1 | 1 |
| X8 | 1 | -1 | 1 | 1 | 1 | -1 | -1 | -1 |

A PAPR of the 8 groups of initial pilot values shown in Table 5 is 5.24 dB.

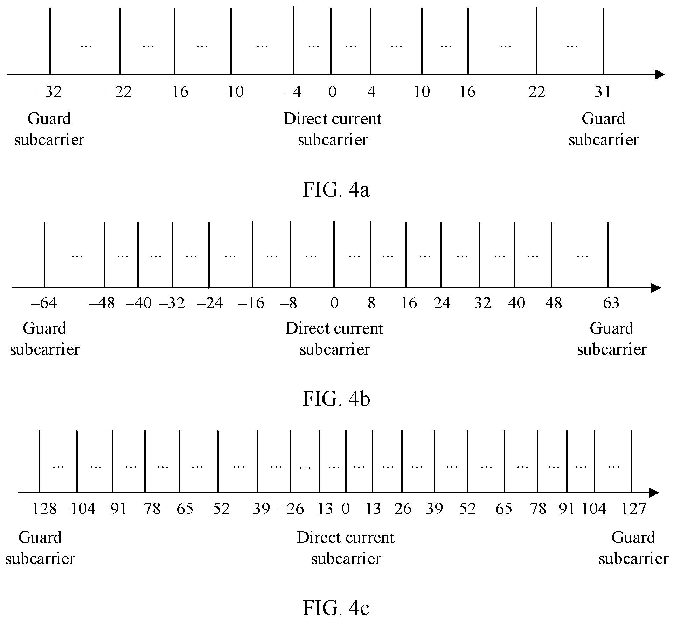

For example, for Example 1 and Example 2 above, a DFT size may be 64 (or N = 64 or an IDFT size is 64), and indexes (or referred to as index values) of the 64 subcarriers are integers from -32 to 31, denoted as [-32:31]. The 64 subcarriers may include 8 pilot subcarriers. Indexes of the 8 pilot subcarriers may be [-22, -16, -10, -4, 4, 10, 16, 22]. The indexes of the pilot subcarriers listed herein are merely an example, and should not be construed as a limitation on embodiments of this application. FIG. 4a is a diagram of distribution of pilot subcarriers according to an embodiment of this application. As shown in FIG. 4a, the bandwidth of the PPDU may include a direct current subcarrier, a guard subcarrier, a pilot subcarrier, and a data subcarrier. An index of the data subcarrier is not shown in FIG. 4a. Quantities of direct current subcarriers and guard subcarriers are not limited in embodiments of this application.

Example 3

Table 6 shows initial pilot values when there are 8 spatial streams and 12 pilot subcarriers. A row in Table 6 represents a group of initial pilot values corresponding to each spatial stream. A column in Table 6 represents 8 initial pilot values on the 8 spatial streams corresponding to one pilot subcarrier. $\Psi_{iss,0}$ to $\Psi_{iss,11}$ sequentially represent initial pilot values of a 1st pilot subcarrier to a 12th pilot subcarrier in 12 pilot subcarriers corresponding to a spatial stream whose index is iss. A value of iss is any one of X1, X2, X3, X4, X5, X6, X7, or X8.
For related descriptions of the spatial stream index iss, X1 to X8, and the like, refer to Table 3 to Table 5. Details are not described herein again.

Table 6

| iss | $\Psi_{iss,0}$ | $\Psi_{iss,1}$ | $\Psi_{iss,2}$ | $\Psi_{iss,3}$ | $\Psi_{iss,4}$ | $\Psi_{iss,5}$ | $\Psi_{iss,6}$ | $\Psi_{iss,7}$ | $\Psi_{iss,8}$ | $\Psi_{iss,9}$ | $\Psi_{iss,10}$ | $\Psi_{iss,11}$ |
|---|---|---|---|---|---|---|---|---|---|---|---|---|
| X1 | -1 | -1 | 1 | 1 | -1 | 1 | -1 | 1 | 1 | 1 | 1 | -1 |
| X2 | -1 | 1 | -1 | 1 | 1 | 1 | -1 | 1 | -1 | -1 | -1 | -1 |
| X3 | -1 | -1 | -1 | -1 | -1 | -1 | -1 | 1 | 1 | -1 | -1 | 1 |
| X4 | -1 | 1 | 1 | -1 | 1 | 1 | 1 | 1 | 1 | 1 | -1 | 1 |
| X5 | -1 | 1 | -1 | 1 | 1 | -1 | -1 | -1 | 1 | 1 | 1 | 1 |
| X6 | -1 | -1 | -1 | -1 | 1 | 1 | 1 | -1 | 1 | -1 | 1 | -1 |
| X7 | -1 | -1 | 1 | -1 | 1 | -1 | -1 | -1 | -1 | 1 | -1 | -1 |
| X8 | -1 | 1 | 1 | 1 | -1 | -1 | 1 | -1 | 1 | -1 | -1 | -1 |

A PAPR of the 12 groups of initial pilot values shown in Table 6 is 4.77 dB.
For example, for Example 3 above, a DFT size may be 128 (or N = 128 or an IDFT size is 128), and indexes of the 128 subcarriers may be integers from -64 to 63, denoted as [-64:63]. The 128 subcarriers may include 12 pilot subcarriers. Indexes of the 12 pilot subcarriers may be [-48, -40, -32, -24, -16, -8, 8, 16, 24, 32, 40, 48]. The indexes of the pilot subcarriers listed herein are merely an example, and should not be construed as a limitation on embodiments of this application. FIG. 4b is a diagram of distribution of pilot subcarriers according to an embodiment of this application. As shown in FIG. 4b, the bandwidth of the PPDU may include a direct current subcarrier, a guard subcarrier, a pilot subcarrier, and a data subcarrier. An index of the data subcarrier is not shown in FIG. 4b. Quantities of direct current subcarriers and guard subcarriers are not limited in embodiments of this application.

Example 4

Table 7 shows initial pilot values when there are 8 spatial streams and 16 pilot subcarriers. A row in Table 7 represents a group of initial pilot values corresponding to each spatial stream. A column in Table 7 represents 8 initial pilot values on the 8 spatial streams corresponding to one pilot subcarrier. $\Psi_{iss,0}$ to $\Psi_{iss,15}$ sequentially represent initial pilot values of a 1st pilot subcarrier to a 16th pilot subcarrier in 16 pilot subcarriers corresponding to a spatial stream whose index is iss. A value of iss is any one of X1, X2, X3, X4, X5, X6, X7, or X8.
For related descriptions of Table 7, refer to Table 3 to Table 5 and the like. Details are not described herein again.

Table 7

| iss | $\Psi_{iss,0}$ | $\Psi_{iss,1}$ | $\Psi_{iss,2}$ | $\Psi_{iss,3}$ | $\Psi_{iss,4}$ | $\Psi_{iss,5}$ | $\Psi_{iss,6}$ | $\Psi_{iss,7}$ | $\Psi_{iss,8}$ | $\Psi_{iss,9}$ | $\Psi_{iss,10}$ | $\Psi_{iss,11}$ | $\Psi_{iss,12}$ | $\Psi_{iss,13}$ | $\Psi_{iss,14}$ | $\Psi_{iss,15}$ |
|---|---|---|---|---|---|---|---|---|---|---|---|---|---|---|---|---|
| X1 | 1 | 1 | 1 | 1 | 1 | 1 | 1 | 1 | 1 | 1 | 1 | 1 | 1 | 1 | 1 | 1 |
| X2 | -1 | 1 | 1 | -1 | 1 | -1 | 1 | -1 | 1 | -1 | 1 | -1 | 1 | -1 | 1 | -1 |
| X3 | 1 | 1 | -1 | -1 | 1 | 1 | -1 | -1 | 1 | 1 | -1 | -1 | 1 | 1 | -1 | -1 |
| X4 | -1 | 1 | -1 | 1 | 1 | -1 | -1 | 1 | 1 | -1 | -1 | 1 | 1 | -1 | -1 | 1 |
| X5 | 1 | 1 | 1 | 1 | -1 | -1 | -1 | -1 | 1 | 1 | 1 | 1 | -1 | -1 | -1 | -1 |
| X6 | -1 | 1 | 1 | -1 | -1 | 1 | -1 | 1 | 1 | -1 | 1 | -1 | -1 | 1 | -1 | 1 |
| X7 | -1 | 1 | -1 | 1 | -1 | 1 | 1 | -1 | 1 | 1 | -1 | 1 | -1 | 1 | 1 | -1 |
| X8 | -1 | 1 | 1 | -1 | -1 | 1 | -1 | 1 | -1 | 1 | -1 | 1 | 1 | -1 | 1 | -1 |

A PAPR of the 12 groups of initial pilot values shown in Table 7 is 5.91 dB.

For example, for Example 4 above, a DFT size may be 256 (or N = 256 or an IDFT size is 256), and indexes of the 256 subcarriers are integers from -128 to 127, denoted as [-128:127]. The 256 subcarriers may include 16 pilot subcarriers. Indexes of the 16 pilot subcarriers may be [-104, -91, -78, -65, -52, -39, -26, -13, 13, 26, 39, 52, 65, 78, 91, 104]. The indexes of the pilot subcarriers listed herein are merely an example, and should not be construed as a limitation on embodiments of this application. FIG. 4c is a diagram of distribution of pilot subcarriers according to an embodiment of this application. As shown in FIG. 4c, the bandwidth of the PPDU may include a direct current subcarrier, a guard subcarrier, a pilot subcarrier, and a data subcarrier. An index of the data subcarrier is not shown in FIG. 4c. Quantities of direct current subcarriers and guard subcarriers are not limited in embodiments of this application.

Example 5

Table 8 shows initial pilot values when there are 8 spatial streams and 20 pilot subcarriers. A row in Table 8 represents a group of initial pilot values corresponding to each spatial stream. A column in Table 8 represents 8 initial pilot values on the 8 spatial streams corresponding to one pilot subcarrier. $\Psi_{iss,0}$ to $\Psi_{iss,19}$ sequentially represent initial pilot values of a 1st pilot subcarrier to a 20th pilot subcarrier in 20 pilot subcarriers corresponding to a spatial stream whose index is iss. A value of iss is any one of X1, X2, X3, X4, X5, X6, X7, or X8.

For related descriptions of the spatial stream index iss, X1 to X8, and the like, refer to Table 3 to Table 5. Details are not described herein again.

A PAPR of the 20 groups of initial pilot values shown in Table 8 is 6.0206 dB.

Table 8

| iss | $\Psi_{iss,0}$ | $\Psi_{iss,1}$ | $\Psi_{iss,2}$ | $\Psi_{iss,3}$ | $\Psi_{iss,4}$ | $\Psi_{iss,5}$ | $\Psi_{iss,6}$ | $\Psi_{iss,7}$ | $\Psi_{iss,8}$ | $\Psi_{iss,9}$ | $\Psi_{iss,10}$ | $\Psi_{iss,11}$ | $\Psi_{iss,12}$ | $\Psi_{iss,13}$ | $\Psi_{iss,14}$ | $\Psi_{iss,15}$ | $\Psi_{iss,16}$ | $\Psi_{iss,17}$ | $\Psi_{iss,18}$ | $\Psi_{iss,19}$ |
|---|---|---|---|---|---|---|---|---|---|---|---|---|---|---|---|---|---|---|---|---|
| X1 | -1 | 1 | -1 | -1 | 1 | -1 | 1 | -1 | 1 | 1 | 1 | 1 | -1 | -1 | 1 | -1 | -1 | 1 | 1 | -1 |
| X2 | -1 | 1 | 1 | -1 | 1 | -1 | 1 | 1 | 1 | 1 | -1 | -1 | 1 | -1 | -1 | 1 | 1 | -1 | -1 | -1 |
| X3 | 1 | 1 | -1 | 1 | -1 | 1 | 1 | 1 | 1 | -1 | -1 | 1 | -1 | -1 | 1 | 1 | -1 | -1 | -1 | -1 |
| X4 | -1 | 1 | 1 | -1 | 1 | 1 | 1 | 1 | -1 | -1 | 1 | -1 | -1 | 1 | 1 | -1 | -1 | -1 | -1 | 1 |
| X5 | 1 | 1 | -1 | 1 | 1 | 1 | 1 | -1 | -1 | 1 | -1 | -1 | 1 | 1 | -1 | -1 | -1 | -1 | 1 | -1 |
| X6 | 1 | 1 | 1 | -1 | -1 | 1 | -1 | -1 | 1 | 1 | -1 | -1 | 1 | -1 | -1 | 1 | 1 | 1 | 1 | 1 |
| X7 | -1 | 1 | -1 | 1 | -1 | -1 | 1 | 1 | -1 | -1 | -1 | -1 | 1 | -1 | 1 | -1 | 1 | 1 | 1 | 1 |
| X8 | 1 | 1 | -1 | -1 | 1 | 1 | -1 | -1 | -1 | -1 | 1 | -1 | 1 | -1 | 1 | 1 | 1 | 1 | -1 | -1 |

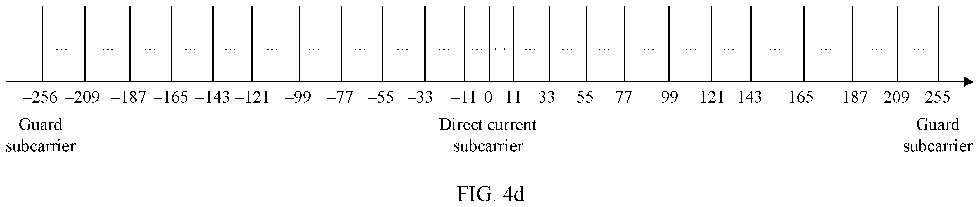

For example, for Example 5 above, a DFT size may be 512 (or N = 512 or an IDFT size is 512), and indexes of the 512 subcarriers may be integers from -256 to 255, denoted as [-256:255]. The 512 subcarriers may include 20 pilot subcarriers. Indexes of the 20 pilot subcarriers may be [-209, -187, -165, -143, -121, -99, -77, -55, -33, -11, 11, 33, 55, 77, 99, 121, 143, 165, 187, 209]. The indexes of the pilot subcarriers listed herein are merely an example, and should not be construed as a limitation on embodiments of this application. FIG. 4d is a diagram of distribution of pilot subcarriers according to an embodiment of this application. As shown in FIG. 4d, the bandwidth of the PPDU may include a direct current subcarrier, a guard subcarrier, a pilot subcarrier, and a data subcarrier. An index of the data subcarrier is not shown in FIG. 4d. Quantities of direct current subcarriers and guard subcarriers are not limited in embodiments of this application.

Example 6

Table 9 and Table 10 show initial pilot values when there are 8 spatial streams and 24 pilot subcarriers. A row in Table 9 and Table 10 represents a group of initial pilot values corresponding to each spatial stream. A column in Table 9 and Table 10 represents 8 initial pilot values on the 8 spatial streams corresponding to one pilot subcarrier. $\Psi_{iss,0}$ to $\Psi_{iss,23}$ sequentially represent initial pilot values of a 1st pilot subcarrier to a 24th pilot subcarrier in 24 pilot subcarriers corresponding to a spatial stream whose index is iss. A value of iss is any one of X1, X2, X3, X4, X5, X6, X7, or X8.

For related descriptions of Table 9 and Table 10, refer to Table 3 to Table 5 and the like. Details are not described herein again.

A PAPR of the 20 groups of initial pilot values shown in Table 9 is 6.347 dB. A PARP of the 24 groups of initial pilot values shown in Table 10 is 6.233 dB.

Table 9

| iss | $\Psi_{iss,0}$ | $\Psi_{iss,1}$ | $\Psi_{iss,2}$ | $\Psi_{iss,3}$ | $\Psi_{iss,4}$ | $\Psi_{iss,5}$ | $\Psi_{iss,66}$ | $\Psi_{iss,7}$ | $\Psi_{iss,8}$ | $\Psi_{iss,9}$ | $\Psi_{iss,10}$ | $\Psi_{iss,11}$ | $\Psi_{iss,12}$ | $\Psi_{iss,13}$ | $\Psi_{iss,14}$ | $\Psi_{iss,15}$ | $\Psi_{iss,16}$ | $\Psi_{iss17}$ | $\Psi_{iss,18}$ | $\Psi_{iss,19}$ | $\Psi_{iss,20}$ | $\Psi_{iss,21}$ | $\Psi_{iss,22}$ | $\Psi_{iss,23}$ |
|---|---|---|---|---|---|---|---|---|---|---|---|---|---|---|---|---|---|---|---|---|---|---|---|---|
| X1 | -1 | 1 | 1 | 1 | 1 | 1 | -1 | 1 | -1 | -1 | -1 | 1 | 1 | 1 | 1 | -1 | 1 | -1 | -1 | 1 | 1 | -1 | 1 | 1 |
| X2 | -1 | -1 | -1 | -1 | 1 | 1 | 1 | -1 | -1 | -1 | -1 | -1 | 1 | -1 | -1 | 1 | 1 | -1 | 1 | -1 | 1 | -1 | 1 | -1 |
| X3 | -1 | 1 | 1 | -1 | 1 | -1 | 1 | -1 | 1 | 1 | -1 | 1 | 1 | 1 | 1 | 1 | 1 | 1 | 1 | -1 | -1 | 1 | 1 | 1 |
| X4 | -1 | 1 | -1 | -1 | 1 | -1 | -1 | 1 | -1 | 1 | 1 | -1 | -1 | -1 | 1 | -1 | -1 | -1 | 1 | -1 | -1 | -1 | 1 | 1 |
| X5 | -1 | 1 | 1 | 1 | 1 | 1 | -1 | 1 | -1 | -1 | -1 | 1 | -1 | -1 | -1 | 1 | -1 | 1 | 1 | -1 | -1 | 1 | -1 | -1 |
| X6 | -1 | -1 | 1 | 1 | 1 | 1 | 1 | 1 | 1 | 1 | 1 | -1 | -1 | 1 | -1 | 1 | -1 | 1 | -1 | -1 | 1 | -1 | 1 | 1 |
| X7 | -1 | 1 | -1 | 1 | -1 | 1 | -1 | -1 | 1 | 1 | -1 | -1 | -1 | 1 | 1 | 1 | 1 | 1 | 1 | 1 | 1 | -1 | -1 | 1 |
| X8 | -1 | -1 | -1 | -1 | 1 | 1 | 1 | -1 | -1 | -1 | -1 | -1 | -1 | 1 | 1 | -1 | -1 | 1 | -1 | 1 | -1 | 1 | -1 | 1 |

Table 10

| iss | $\Psi_{iss,0}$ | $\Psi_{iss,1}$ | $\Psi_{iss,2}$ | $\Psi_{iss,3}$ | $\Psi_{iss,4}$ | $\Psi_{iss,5}$ | $\Psi_{iss,66}$ | $\Psi_{iss,7}$ | $\Psi_{iss,8}$ | $\Psi_{iss,9}$ | $\Psi_{iss,10}$ | $\Psi_{iss,11}$ | $\Psi_{iss,12}$ | $\Psi_{iss,13}$ | $\Psi_{iss,14}$ | $\Psi_{iss,15}$ | $\Psi_{iss,16}$ | $\Psi_{iss170}$ | $\Psi_{iss,18}$ | $\Psi_{iss,19}$ | $\Psi_{iss,20}$ | $\Psi_{iss,21}$ | $\Psi_{iss,22}$ | $\Psi_{iss,23}$ |
|---|---|---|---|---|---|---|---|---|---|---|---|---|---|---|---|---|---|---|---|---|---|---|---|---|
| X1 | 1 | -1 | 1 | -1 | -1 | 1 | -1 | 1 | -1 | -1 | -1 | 1 | 1 | 1 | -1 | 1 | 1 | -1 | -1 | 1 | 1 | 1 | 1 | 1 |
| X2 | -1 | 1 | -1 | -1 | 1 | 1 | 1 | -1 | 1 | -1 | -1 | -1 | 1 | -1 | -1 | 1 | 1 | 1 | 1 | -1 | 1 | 1 | 1 | 1 |
| X3 | -1 | 1 | -1 | 1 | -1 | -1 | 1 | 1 | -1 | -1 | -1 | 1 | -1 | -1 | 1 | -1 | -1 | -1 | -1 | -1 | 1 | 1 | 1 | 1 |
| X4 | -1 | 1 | 1 | -1 | 1 | -1 | -1 | -1 | 1 | 1 | -1 | -1 | -1 | 1 | -1 | -1 | -1 | -1 | -1 | 1 | -1 | 1 | 1 | 1 |
| X5 | 1 | 1 | -1 | -1 | -1 | -1 | 1 | -1 | -1 | 1 | 1 | -1 | 1 | 1 | 1 | -1 | 1 | -1 | 1 | 1 | 1 | 1 | -1 | 1 |
| X6 | -1 | -1 | -1 | -1 | 1 | 1 | 1 | 1 | 1 | -1 | 1 | 1 | -1 | 1 | 1 | 1 | -1 | -1 | 1 | 1 | -1 | 1 | -1 | 1 |
| X7 | 1 | 1 | 1 | 1 | 1 | -1 | -1 | 1 | 1 | -1 | 1 | 1 | 1 | -1 | -1 | -1 | 1 | -1 | 1 | -1 | -1 | 1 | -1 | 1 |
| X8 | 1 | 1 | 1 | -1 | -1 | 1 | -1 | -1 | -1 | -1 | 1 | 1 | -1 | -1 | -1 | 1 | 1 | -1 | 1 | -1 | -1 | -1 | 1 | 1 |

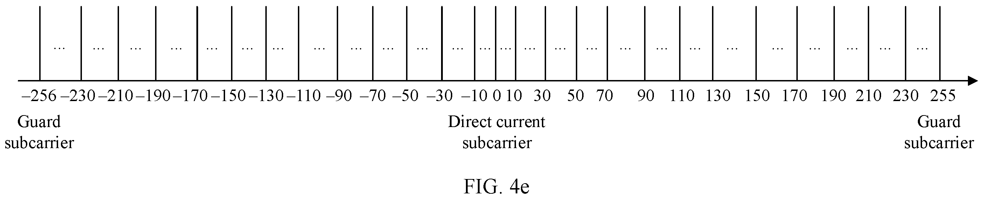

For example, for Example 6 above, a DFT size may be 512 (or N = 512 or an IDFT size is 512), and indexes of the 512 subcarriers may be integers from -256 to 255, denoted as [-256:255]. The 512 subcarriers may include 24 pilot subcarriers. Indexes of the 24 pilot subcarriers may be [-230, -210, -190, -170, -150, -130, -110, -90, -70, -50, -30, -10, 10, 30, 50, 70, 90, 110, 130, 150, 170, 190, 210, 230]. The indexes of the pilot subcarriers listed herein are merely an example, and should not be construed as a limitation on embodiments of this application. FIG. 4e is a diagram of distribution of pilot subcarriers according to an embodiment of this application. As shown in FIG. 4e, the bandwidth of the PPDU may include a direct current subcarrier, a guard subcarrier, a pilot subcarrier, and a data subcarrier. An index of the data subcarrier is not shown in FIG. 4e. Quantities of direct current subcarriers and guard subcarriers are not limited in embodiments of this application.

The following describes a design principle of Table 5 to Table 10 in detail. A multi-stream pilot design solution shown in embodiments of this application is merely an example. During specific implementation, initial pilot values may be defined in a standard, or the like. In other words, steps in the following design solution are merely an example. During specific implementation, both communication parties may not perform the following steps. For example, both communication parties may store Table 3 to Table 10.

The multi-stream pilot design solution may be as follows:

(1) Obtain an initial orthogonal sequence based on a Hadamard matrix.

The Hadamard matrix is an orthogonal square matrix. For example, the initial orthogonal sequence is a matrix with 8 rows and M columns that is obtained based on the Hadamard matrix. For example, M = 8, 12, 16, 20, or 24.

For example, if M = 8, the initial orthogonal sequence is a Hadamard square matrix with 8 rows and 8 columns.

For another example, if M = 12, the initial orthogonal sequence may be a matrix with 8 rows and 12 columns that is obtained based on a $12 \times 12$ Hadamard matrix. There are a total of $C_{12}^8$ selection manners for randomly selecting 8 rows from the $12 \times 12$ square matrix, so that 495 sequences can be obtained. Each sequence includes an $8 \times 12$ matrix.

For another example, if M = 16, the initial orthogonal sequence may be a matrix with 8 rows and 16 columns that is obtained based on a $16 \times 16$ Hadamard matrix. There are a total of $C_{16}^8$ selection manners for randomly selecting 8 rows from the $16 \times 16$ square matrix, so that 12870 sequences can be obtained. Each sequence includes an $8 \times 16$ matrix.

It can be learned based on the foregoing description of phase offset estimation that if the matrix Q is a matrix whose rows are orthogonal, a phase offset of each spatial stream may be obtained by calculating a transpose $Q^T \times y$ of the matrix Q during phase offset estimation. If the matrix Q has no row orthogonality, the second communication apparatus needs to calculate pinv(Q) $\times$ y, that is, needs to perform a pseudo-inverse operation on Q. Therefore, a sequence obtained through the Hadamard matrix has better orthogonality. This can simplify workload of the second communication apparatus during phase offset estimation and reduce complexity of phase offset estimation.

To reduce a computation amount of retrieval, one way is to obtain a corresponding quantity of sequences based on the foregoing described manner. Another way is to randomly select a constant quantity of sequences. For example, 500 sequences (or 1000 sequences or the like) may be randomly selected from a plurality of obtained sequences.

(2) Multiply a column in the matrix with 8 rows and M columns by -1, to obtain a plurality of orthogonal sequences. Multiply two columns in the matrix with 8 rows and M columns by -1, to obtain a plurality of orthogonal sequences. Multiply three columns in the matrix with 8 rows and M columns by -1, to obtain a plurality of orthogonal sequences. The rest may be deduced by analogy until $\frac{M}{2}$ columns in the matrix with 8 rows and M columns is multiplied by -1, to obtain a plurality of orthogonal sequences.

(3) Exchange an order of two columns in a matrix with 8 rows and M columns that is obtained in step (2), to obtain a plurality of orthogonal sequences. Exchange an order of three columns in the matrix with 8 rows and M columns that is obtained in step (2), to obtain a plurality of orthogonal sequences. The rest may be deduced by analogy until an order of $\frac{M}{2}$ columns in the matrix with 8 rows and M columns is exchanged.

Exchanging the order may be exchanging an order of an $a^{th}$ column and a $b^{th}$ column in the matrix, or placing an inverse sequence of the $a^{th}$ column in the $b^{th}$ column and placing an inverse sequence of the $b^{th}$ column in the $a^{th}$ column. For example, the order exchange may include clockwise exchange or counterclockwise exchange. For example, a matrix abc with three columns may be bca after clockwise exchange, and may be cab after counterclockwise exchange.

More orthogonal sequences with 8 rows and M columns may be obtained through steps (2) and (3).

(4) Calculate maximum PAPRs of all sequences, and then select a sequence with a small PAPR from the maximum PAPRs.

For example, the maximum PAPR may be calculated in the following manner: Place initial pilot values at corresponding pilot positions (namely, indexes of pilot subcarriers), and set a data subcarrier to 0, to calculate a PAPR of a signal. Then, calculate a maximum value for PAPRs of M $\times$ Nss transformed signals under various shifts of each spatial stream, to obtain the maximum PAPR shown herein.

For example, 500 sequences are obtained through step (1), 500 $\times$ X sequences are obtained through step (2), and 500 $\times$ X $\times$ Y sequences are obtained through step (3). For example, if X $\times$ Y = 10, 5000 sequences are obtained through steps (1) to (3). In step (4), PAPRs of M $\times$ Nss transformed sequences under various shifts for each sequence may be calculated. For example, M = 16, and Nss = 8. PAPRs of 96 shifted sequences corresponding to each sequence may be calculated through step (4), to obtain a maximum PARP of the 96 shifted sequences (that is, select the maximum PAPR from the 96 PAPRs). By analogy, a sequence corresponding to the smallest PAPR in the maximum PAPRs is selected, which is the Nss groups of initial pilot values.

The maximum PAPR is selected from the PAPRs of all transformed sequences corresponding to each sequence in the plurality of sequences, so that the sequence corresponding to the smallest PAPR in the maximum PAPRs is determined as initial pilot values. This can better ensure PAPR performance. The initial pilot values shown in Table 5 to Table 10 can effectively ensure a small PAPR on each spatial stream corresponding to each OFDM symbol.

In some other embodiments of this application, the Nss spatial streams for transmitting the PPDU may correspond to a same group of initial pilot values. For example, the pilot values carried on the pilot subcarriers corresponding to the data field are determined based on the bandwidth for transmitting the PPDU and a group of initial pilot values. The group of initial pilot values to which the Nss spatial streams correspond may be a group of initial pilot values to which any one of the Nss spatial streams shown above corresponds. For example, both communication parties may store the group of initial pilot values.

In still some other embodiments of this application, the Nss spatial streams for transmitting the PPDU may correspond to a same group of initial pilot values. The group of initial pilot values to which the Nss spatial streams correspond may be a group of initial pilot values indicated by any row shown in Table 3 to Table 10 above. For example, both communication parties may store Table 3 to Table 10 above, and select any row from the tables as the group of initial pilot values to which the Nss spatial streams correspond.

The following describes communication apparatuses provided in embodiments of this application.

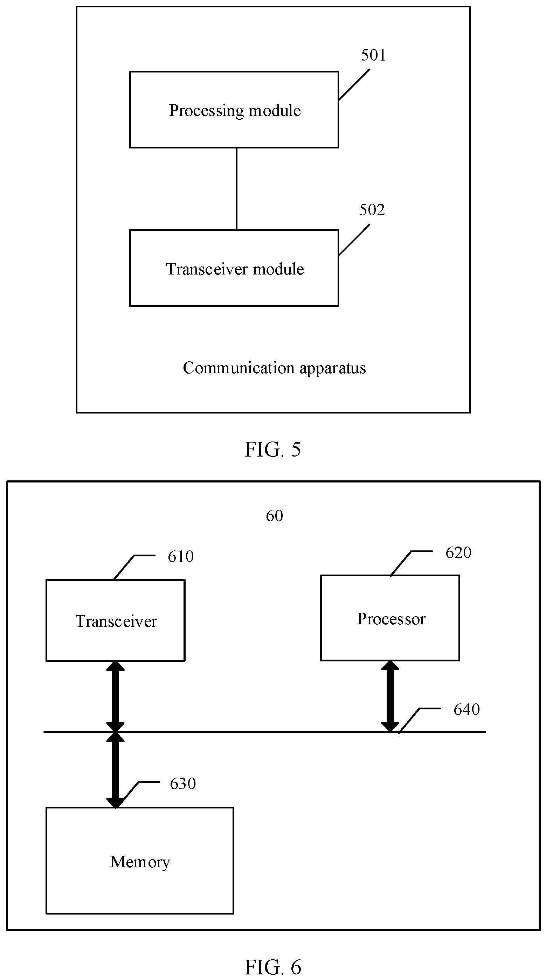

In this application, the communication apparatus is divided into functional modules based on the foregoing method embodiments. For example, each functional module corresponding to each function may be obtained through division, or two or more functions may be integrated into one processing module. The integrated module may be implemented in a form of hardware, or may be implemented in a form of a software functional module. It should be noted that in this application, division into the modules is an example, and is merely logical function division. During actual implementation, another division manner may be used. The communication apparatuses in embodiments of this application are described below in detail with reference to FIG. 5 to FIG. 7.

FIG. 5 is a diagram of a structure of a communication apparatus according to an embodiment of this application. As shown in FIG. 5, the communication apparatus includes a processing module 501 and a transceiver module 502. The transceiver module 502 may implement a corresponding communication function. The processing module 501 is configured to process data. For example, the transceiver module 502 may also be referred to as an interface, a communication interface, a communication module, or the like.

In some embodiments of this application, the communication apparatus may be configured to perform actions performed by the first communication apparatus in the foregoing method embodiments. In this case, the communication apparatus may be a Wi-Fi device, or a component (for example, a chip, a system, or a functional module) that can be configured in the Wi-Fi device. The transceiver module 502 is configured to perform a transceiving-related operation of the first communication apparatus in the foregoing method embodiments. The processing module 501 is configured to perform a processing-related operation of the first communication apparatus in the foregoing method embodiments.

The processing module 501 is configured to generate a PPDU. The transceiver module 502 is configured to send or output the PPDU.

For example, the PPDU may include a data field. Pilot values carried on pilot subcarriers corresponding to the data field are determined based on a bandwidth of the PPDU and Nss groups of initial pilot values. At least two groups of initial pilot values in the Nss groups of initial pilot values are different. Each group of initial pilot values in the Nss groups of initial pilot values includes M initial pilot values. M is greater than 6. A value of Nss is the same as a total quantity of spatial streams used to transmit the PPDU. Nss is a positive integer.

For example, M = 8, 12, 16, 20, or 24. Nss is a positive integer less than or equal to 8.

For the Nss groups of initial pilot values, refer to Table 3 to Table 10 above. Details are not described herein again.

For example, the processing module 501 may include at least one of the following components: a pilot subcarrier component, a constellation mapper, an encoder, a stream cyclic shift component, a space and frequency mapping component, an IDFT component, and a cyclic prefix insertion and windowing component. For example, the transceiver module 502 may include a radio frequency component, an antenna component, and the like. For example, the transceiver module 502 may include a pin component and the like.

Still refer to FIG. 5. In some other embodiments of this application, the communication apparatus may be configured to perform actions performed by the second communication apparatus in the foregoing method embodiments. In this case, the communication apparatus may be a Wi-Fi device, or a component (for example, a chip, a system, or a functional module) that can be configured in the Wi-Fi device. The transceiver module 502 is configured to perform a transceiving-related operation of the second communication apparatus in the foregoing method embodiments. The processing module 501 is configured to perform a processing-related operation of the second communication apparatus in the foregoing method embodiments.

The transceiver module 502 is configured to input or receive a PPDU. The processing module 501 is configured to parse the PPDU.

For example, the processing module 501 may include at least one of the following components: a pilot subcarrier component, a cyclic prefix removal component, a DFT component, a de-interleaving component, a de-constellation component, a decoder, and a descrambler. For example, the transceiver module 502 may include a radio frequency component, an antenna component, and the like. For example, the transceiver module 502 may include a pin component and the like.

Optionally, in the foregoing embodiments, the communication apparatus may further include a storage module. The storage module may be configured to store instructions and/or data (for example, the initial pilot values shown above).

The processing module 501 may read the instructions and/or the data in the storage module, so that the communication apparatus implements the foregoing method embodiments.

In the foregoing embodiments, for specific descriptions of terms or steps such as the PPDU, pilot subcarrier, pilot value, initial pilot value, and data field, refer to the descriptions in the foregoing method embodiments. Details are not described herein again.

Specific descriptions of the transceiver module and the processing module shown in the foregoing embodiments are merely examples. For specific functions or steps performed by the transceiver module and the processing module, refer to the foregoing method embodiments. Details are not described herein again.

The foregoing describes the communication apparatus in embodiments of this application. The following describes a possible product form of the communication apparatus. Any form of product that has a function of the communication apparatus described in FIG. 5 falls within the protection scope of embodiments of this application. The following descriptions are merely examples, and a product form of the communication apparatus in embodiments of this application is not limited thereto.

In a possible implementation, in the communication apparatus shown in FIG. 5, the processing module 501 may be one or more processors, and the transceiver module 502 may be a transceiver; or the transceiver module 502 may be a sending module and a receiving module, the sending module may be a transmitter, and the receiving module may be a receiver, the sending module and the receiving module are integrated into one component, for example, a transceiver. In embodiments of this application, the processor and the transceiver may be coupled, or the like. A connection manner of the processor and the transceiver is not limited in embodiments of this application. In a process of performing the foregoing method, a process of sending information in the foregoing method may be a process of outputting the information by the processor. When outputting the information, the processor outputs the information to a transceiver, so that the transceiver transmits the information. After the information is output by the processor, other processing may further need to be performed on the information before the information arrives at the transceiver. Similarly, a process of receiving information in the foregoing method may be a process of receiving the entered information by the processor. When the processor receives the input information, the transceiver receives the information, and inputs the information into the processor. Further, after the transceiver receives the information, other processing may need to be performed on the information before processed information is entered into the processor.

As shown in FIG. 6, the communication apparatus 60 includes one or more processors 620 and a transceiver 610.

For example, when the communication apparatus is configured to perform the steps, the method, or the functions performed by the first communication apparatus, the processor 620 is configured to generate a PPDU; and the transceiver 610 is configured to send the PPDU.

For example, when the communication apparatus is configured to perform the steps, the method, or the functions performed by the second communication apparatus, the transceiver 610 is configured to receive a PPDU; and the processor 620 is further configured to parse the PPDU.

In the foregoing embodiments, for specific descriptions of terms or steps such as the PPDU, pilot subcarrier, pilot value, initial pilot value, and data field, refer to the descriptions in the foregoing method embodiments. Details are not described herein again.

In each implementation of the communication apparatus shown in FIG. 6, the transceiver may include a receiver and a transmitter. The receiver is configured to perform a function (or an operation) of receiving, and the transmitter is configured to perform a function (or an operation) of transmitting. In addition, the transceiver is configured to communicate with another device/apparatus through a transmission medium.

Optionally, the communication apparatus 60 may further include one or more memories 630, configured to store program instructions and/or data. The memory 630 is coupled to the processor 620. The coupling in embodiments of this application may be an indirect coupling or a communication connection between apparatuses, units, or modules in an electrical form, a mechanical form, or another form, and is used for information exchange between the apparatuses, the units, or the modules. The processor 620 may cooperate with the memory 630. The processor 620 may execute the program instructions stored in the memory 630. Optionally, at least one of the one or more memories may be included in the processor. For example, the memory may be configured to store Nss groups of initial pilot values.

A specific connection medium between the transceiver 610, the processor 620, and the memory 630 is not limited in embodiments of this application. In embodiments of this application, the memory 630, the processor 620, and the transceiver 610 are connected through a bus 640 in FIG. 6. The bus is represented by a bold line in FIG. 6. A manner of a connection between other components is merely an example for description, and imposes no limitation. The bus may be classified as an address bus, a data bus, a control bus, or the like. For ease of representation, only one bold line is used for representation in FIG. 6, but this does not mean that there is only one bus or only one type of bus.

In embodiments of this application, the processor may be a general-purpose processor, a digital signal processor, an application-specific integrated circuit, a field programmable gate array or another programmable logic device, a discrete gate or transistor logic device, a discrete hardware component, or the like, and may implement or perform the method, steps, and logical block diagrams disclosed in embodiments of this application. The general-purpose processor may be a microprocessor, any conventional processor, or the like. The steps of the method disclosed with reference to embodiments of this application may be directly performed and completed by a hardware processor, or may be performed and completed by using a combination of hardware in the processor and a software module, or the like.

In embodiments of this application, the memory may include but is not limited to a non-volatile memory like a hard disk drive (hard disk drive, HDD) or a solid-state drive (solid-state drive, SSD), a random access memory (Random Access Memory, RAM), an erasable programmable read-only memory (Erasable Programmable ROM, EPROM), a read-only memory (Read-Only Memory, ROM), a portable read-only memory (Compact Disc Read-Only Memory, CD-ROM), or the like. The memory is any storage medium that can be used to carry or store program code in a form of an instruction or a data structure and that can be read and/or written by a computer (for example, the communication apparatus shown in this application). However, this application is not limited thereto. The memory in embodiments of this application may alternatively be a circuit or any other apparatus that can implement a storage function, and is configured to store the program instructions and/or the data.

The processor 620 is mainly configured to: process a communication protocol and communication data, control the entire communication apparatus, execute a software program, and process data of the software program. The memory 630 is mainly configured to store the software program and the data. The transceiver 610 may include a control circuit and an antenna. The control circuit is mainly configured to: perform conversion between a baseband signal and a radio frequency signal, and process the radio frequency signal. The antenna is mainly configured to receive and send a radio frequency signal in a form of an electromagnetic wave. An input/output apparatus, such as a touchscreen, a display, or a keyboard, is mainly configured to: receive data input by a user and output data to the user.

After the communication apparatus is powered on, the processor 620 may read the software program in the memory 630, interpret and execute an instruction of the software program, and process data of the software program. When the data needs to be sent in a wireless manner, the processor 620 performs baseband processing on to-be-sent data, and then outputs a baseband signal to a radio frequency circuit. The radio frequency circuit performs radio frequency processing on the baseband signal, and then sends a radio frequency signal in a form of an electromagnetic wave through the antenna. When data is sent to the communication apparatus, the radio frequency circuit receives a radio frequency signal through the antenna, converts the radio frequency signal into a baseband signal, and outputs the baseband signal to the processor 620. The processor 620 converts the baseband signal into data and processes the data.

In another implementation, the radio frequency circuit and the antenna may be disposed independent of the processor that performs baseband processing. For example, in a distributed scenario, the radio frequency circuit and the antenna may be disposed remotely and independent of the communication apparatus.

The communication apparatus shown in embodiments of this application may further have more components than those in FIG. 6, or the like. This is not limited in embodiments of this application. The method performed by the processor and the transceiver is merely an example. For specific steps performed by the processor and the transceiver, refer to the method described above.

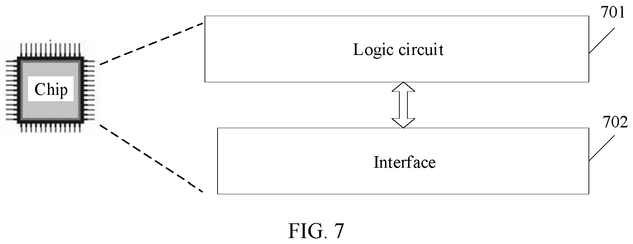

In another possible implementation, in the communication apparatus shown in FIG. 5, the processing module 501 may be one or more logic circuits, and the transceiver module 502 may be an input/output interface that is also referred to as a communication interface, an interface circuit, an interface, or the like. Alternatively, the transceiver module 502 may be a sending module and a receiving module. The sending module may be an output interface. The receiving module may be an input interface. The sending module and the receiving module are integrated into one module, for example, an input/output interface. As shown in FIG. 7, a communication apparatus shown in FIG. 7 includes a logic circuit 701 and an interface 702. In other words, the processing module 501 may be implemented by using the logic circuit 701, and the transceiver module 502 may be implemented by using the interface 702. The logic circuit 701 may be a chip, a processing circuit, an integrated circuit, a system on chip (system on chip, SoC), or the like. The interface 702 may be a communication interface, an input/output interface, a pin, or the like. For example, FIG. 7 is an example in which the foregoing communication apparatus is a chip. The chip includes the logic circuit 701 and the interface 702. For example, the chip may further include a memory. The memory may be configured to store $N_1$ time-variant function values, $N_1$ time-variant functions, a time-variant function matrix, and the like. Alternatively, the memory may be configured to store computer instructions. For example, the logic circuit 701 may perform, based on the instructions, the method, the function, or the step performed by the first communication apparatus. For another example, the logic circuit 701 may perform, based on the instructions, the method, the function, or the step performed by the second communication apparatus.

In embodiments of this application, the logic circuit and the interface may be further coupled to each other. A specific manner of a connection between the logic circuit and the interface is not limited in embodiments of this application.

For example, when the communication apparatus is configured to perform the method, the functions, or the steps performed by the first communication apparatus, the logic circuit 701 is configured to generate a PPDU; and the interface 702 is configured to output the PPDU.

For example, when the communication apparatus is configured to perform the method, the functions, or the steps performed by the second communication apparatus, the interface 702 is configured to input a PPDU; and the logic circuit 701 is configured to parse the PPDU.

The communication apparatus shown in embodiments of this application may implement the methods provided in embodiments of this application in a form of hardware, or may implement the methods provided in embodiments of this application in a form of software. This is not limited in embodiments of this application.

In the foregoing embodiments, for specific descriptions of terms or steps such as the PPDU, pilot subcarrier, pilot value, initial pilot value, and data field, refer to the descriptions in the foregoing method embodiments. Details are not described herein again. For specific implementations of the embodiments shown in FIG. 7, refer to the foregoing embodiments. Details are not described herein again.

Embodiments of this application further provide a wireless communication system. The wireless communication system includes a first communication apparatus and a second communication apparatus. The first communication apparatus and the second communication apparatus may be configured to perform the method in any one of the foregoing embodiments.

In addition, this application further provides a computer program. The computer program is used to implement operations and/or processing performed by the first communication apparatus in the methods provided in this application.

This application further provides a computer program. The computer program is used to implement operations and/or processing performed by the second communication apparatus in the methods provided in this application.

This application further provides a computer-readable storage medium. The computer-readable storage medium stores computer code. When the computer code is run on a computer, the computer is caused to perform operations and/or processing performed by the first communication apparatus in the methods provided in this application.

This application further provides a computer-readable storage medium. The computer-readable storage medium stores computer code. When the computer code is run on a computer, the computer is caused to perform operations and/or processing performed by the second communication apparatus in the methods provided in this application.

This application further provides a computer program product. The computer program product includes computer code or a computer program. When the computer code or the computer program is run on a computer, operations and/or processing performed by the first communication apparatus in the methods provided in this application are/is performed.

This application further provides a computer program product. The computer program product includes computer code or a computer program. When the computer code or the computer program is run on a computer, operations and/or processing performed by the second communication apparatus in the methods provided in this application are/is performed.

In the several embodiments provided in this application, it should be understood that the disclosed system, apparatus, and method may be implemented in other manners. For example, the described apparatus embodiments are merely examples. For example, module division is merely logical function division. In actual implementation, another division manner may be used. For example, a plurality of modules or components may be combined or integrated into another system, or some features may be ignored or not performed. In addition, the displayed or discussed mutual couplings or direct couplings or communication connections may be implemented through some interfaces, indirect couplings or communication connections between the apparatuses or units, or electrical connections, mechanical connections, or connections in other forms.

The modules described as separate parts may or may not be physically separate, and parts displayed as modules may or may not be physical modules, may be located in one position, or may be distributed on a plurality of network modules. Some or all of the modules may be selected based on an actual requirement to achieve the technical effect of the solutions provided in embodiments of this application.

In addition, functional modules in embodiments of this application may be integrated into one processing module, or each of the modules may exist alone physically, or two or more modules may be integrated into one module. The integrated module may be implemented in a form of hardware, or may be implemented in a form of a software functional module.

When the integrated module is implemented in the form of a software functional module and sold or used as an independent product, the integrated unit may be stored in a computer-readable storage medium. Based on such an understanding, the technical solutions of this application essentially, or the part contributing to the conventional technologies, or all or some of the technical solutions may be implemented in a form of a software product. The computer software product is stored in a readable storage medium and includes a plurality of instructions for instructing a computer device (which may be a personal computer, a server, or a network device) to perform all or some of the steps of the methods described in embodiments of this application. The readable storage medium includes any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

**Claims**

1. A communication method, wherein the method comprises:

   generating a physical layer protocol data unit PPDU, wherein the PPDU comprises a data field, pilot values carried on pilot subcarriers corresponding to the data field are determined based on a bandwidth for transmitting the PPDU and Nss groups of initial pilot values, at least two groups of initial pilot values in the Nss groups of initial pilot values are different, each group of initial pilot values in the Nss groups of initial pilot values comprises M initial pilot values, M is greater than 6, a value of Nss is the same as a total quantity of spatial streams used to transmit the PPDU, and Nss is a positive integer; and
   sending the PPDU.

2. A communication method, wherein the method comprises:

   receiving a physical layer protocol data unit PPDU, wherein the PPDU comprises a data field, pilot values carried on pilot subcarriers corresponding to the data field are determined based on a bandwidth for transmitting the PPDU and Nss groups of initial pilot values, at least two groups of initial pilot values in the Nss groups of initial pilot values are different, each group of initial pilot values in the Nss groups of initial pilot values comprises M initial pilot values, M is greater than 6, a value of Nss is the same as a total quantity of spatial streams used to transmit the PPDU, and Nss is a positive integer; and
   parsing the PPDU.

3. The method according to claim 1 or 2, wherein M = 8, 12, 16, 20, or 24.

4. The method according to any one of claims 1 to 3, wherein Nss is a positive integer less than or equal to 8.

5. The method according to any one of claims 1 to 4, wherein a value of M varies when the bandwidth for transmitting the PPDU varies.

6. The method according to any one of claims 1 to 5, wherein when M = 8, the Nss groups of initial pilot values are Nss groups of initial pilot values indicated by Nss rows in 8 rows shown in the following table:

| iss | $\Psi_{iss,0}$ | $\Psi_{iss,1}$ | $\Psi_{iss,2}$ | $\Psi_{iss,3}$ | $\Psi_{iss,4}$ | $\Psi_{iss,5}$ | $\Psi_{iss,6}$ | $\Psi_{iss,7}$ |
|---|---|---|---|---|---|---|---|---|
| X1 | -1 | 1 | 1 | 1 | 1 | -1 | 1 | 1 |
| X2 | -1 | -1 | -1 | 1 | 1 | 1 | -1 | 1 |
| X3 | -1 | -1 | 1 | -1 | 1 | 1 | 1 | -1 |
| X4 | 1 | -1 | 1 | 1 | -1 | 1 | 1 | 1 |
| X5 | -1 | 1 | 1 | 1 | -1 | 1 | -1 | -1 |
| X6 | -1 | -1 | -1 | 1 | -1 | -1 | 1 | -1 |
| X7 | -1 | -1 | 1 | -1 | -1 | -1 | -1 | 1 |
| X8 | 1 | -1 | 1 | 1 | 1 | -1 | -1 | -1 |

   wherein each row in the table represents a group of initial pilot values, $\Psi_{iss,0}$ to $\Psi_{iss,7}$ sequentially represent initial pilot values of a 1st pilot subcarrier to an 8th pilot subcarrier in 8 pilot subcarriers corresponding to a spatial stream whose index is iss, and a value of iss is any one of X1, X2, X3, X4, X5, X6, X7, or X8.

7. The method according to any one of claims 1 to 5, wherein when M = 12, the Nss groups of initial pilot values are Nss groups of initial pilot values indicated by Nss rows in 8 rows shown in the following table:

| iss | $\Psi_{iss,0}$ | $\Psi_{iss,1}$ | $\Psi_{iss,2}$ | $\Psi_{iss,3}$ | $\Psi_{iss,4}$ | $\Psi_{iss,5}$ | $\Psi_{iss,6}$ | $\Psi_{iss,7}$ | $\Psi_{iss,8}$ | $\Psi_{iss,9}$ | $\Psi_{iss,10}$ | $\Psi_{iss,11}$ |
|---|---|---|---|---|---|---|---|---|---|---|---|---|
| X1 | -1 | -1 | 1 | 1 | -1 | 1 | -1 | 1 | 1 | 1 | 1 | -1 |
| X2 | -1 | 1 | -1 | 1 | 1 | 1 | -1 | 1 | -1 | -1 | -1 | -1 |
| X3 | -1 | -1 | -1 | -1 | -1 | -1 | -1 | 1 | 1 | -1 | -1 | 1 |
| X4 | -1 | 1 | 1 | -1 | 1 | 1 | 1 | 1 | 1 | 1 | -1 | 1 |
| X5 | -1 | 1 | -1 | 1 | 1 | -1 | -1 | -1 | 1 | 1 | 1 | 1 |
| X6 | -1 | -1 | -1 | -1 | 1 | 1 | 1 | -1 | 1 | -1 | 1 | -1 |
| X7 | -1 | -1 | 1 | -1 | 1 | -1 | -1 | -1 | -1 | 1 | -1 | -1 |
| X8 | -1 | 1 | 1 | 1 | -1 | -1 | 1 | -1 | 1 | -1 | -1 | -1 |

wherein each row in the table represents a group of initial pilot values, $\Psi_{iss,0}$ to $\Psi_{iss,11}$ sequentially represent initial pilot values of a 1st pilot subcarrier to a 12th pilot subcarrier in 12 pilot subcarriers corresponding to a spatial stream whose index is iss, and a value of iss is any one of X1, X2, X3, X4, X5, X6, X7, or X8.

8. The method according to any one of claims 1 to 5, wherein when M = 16, the Nss groups of initial pilot values are Nss groups of initial pilot values indicated by Nss rows in 8 rows shown in the following table:

| iss | $\Psi_{iss,0}$ | $\Psi_{iss,1}$ | $\Psi_{iss,2}$ | $\Psi_{iss,3}$ | $\Psi_{iss,4}$ | $\Psi_{iss,5}$ | $\Psi_{iss,6}$ | $\Psi_{iss,7}$ | $\Psi_{iss,8}$ | $\Psi_{iss,9}$ | $\Psi_{iss,10}$ | $\Psi_{iss,11}$ | $\Psi_{iss,12}$ | $\Psi_{iss,13}$ | $\Psi_{iss,14}$ | $\Psi_{iss,15}$ |
|---|---|---|---|---|---|---|---|---|---|---|---|---|---|---|---|---|
| X1 | 1 | 1 | 1 | 1 | 1 | 1 | 1 | 1 | 1 | 1 | 1 | 1 | 1 | 1 | 1 | 1 |
| X2 | -1 | 1 | 1 | -1 | 1 | -1 | 1 | -1 | 1 | -1 | 1 | -1 | 1 | -1 | 1 | -1 |
| X3 | 1 | 1 | -1 | -1 | 1 | 1 | -1 | -1 | 1 | 1 | -1 | -1 | 1 | 1 | -1 | -1 |
| X4 | -1 | 1 | -1 | 1 | 1 | -1 | -1 | 1 | 1 | -1 | -1 | 1 | 1 | -1 | -1 | 1 |
| X5 | 1 | 1 | 1 | 1 | -1 | -1 | -1 | -1 | 1 | 1 | 1 | 1 | -1 | 1 | 1 | -1 |
| X6 | -1 | 1 | 1 | -1 | -1 | 1 | -1 | 1 | 1 | -1 | -1 | 1 | -1 | 1 | -1 | 1 |
| X7 | -1 | 1 | -1 | 1 | -1 | 1 | 1 | -1 | -1 | 1 | -1 | 1 | -1 | 1 | 1 | -1 |
| X8 | -1 | 1 | 1 | -1 | -1 | 1 | -1 | 1 | -1 | 1 | -1 | 1 | 1 | -1 | 1 | -1 |

wherein each row in the table represents a group of initial pilot values, $\Psi_{iss,0}$ to $\Psi_{iss,15}$ sequentially represent initial pilot values of a 1st pilot subcarrier to a 16th pilot subcarrier in 16 pilot subcarriers corresponding to a spatial stream whose index is iss, and a value of iss is any one of X1, X2, X3, X4, X5, X6, X7, or X8.

9. The method according to any one of claims 1 to 8, wherein the pilot values carried on the pilot subcarriers corresponding to the data field are determined based on the bandwidth for transmitting the PPDU, the Nss groups of initial pilot values, and an index of an orthogonal frequency division multiplexing OFDM symbol comprised in the data field.

10. A communication apparatus, comprising a module configured to perform the method according to any one of claims 1 and 3 to 9.

11. A communication apparatus, comprising a module configured to perform the method according to any one of claims 2 to 9.

12. A communication apparatus, comprising a processor, wherein the processor is configured to perform the method according to any one of claims 1 and 3 to 9.

13. A communication apparatus, comprising a processor, wherein the processor is configured to perform the method according to any one of claims 2 to 9.

14. A communication apparatus, comprising a logic circuit and an interface, wherein the logic circuit is coupled to the interface; and
the interface is configured to input and/or output information, and the logic circuit is configured to perform the method according to any one of claims 1 and 3 to 9.

15. A communication apparatus, comprising a logic circuit and an interface, wherein the logic circuit is coupled to the interface; and
the interface is configured to input and/or output information, and the logic circuit is configured to perform the method according to any one of claims 2 to 9.

16. A computer-readable storage medium, wherein the computer-readable storage medium is configured to store a computer program, and when the computer program is executed, the method according to any one of claims 1 and 3 to 9 is performed.

17. A computer-readable storage medium, wherein the computer-readable storage medium is configured to store a computer program, and when the computer program is executed, the method according to any one of claims 2 to 9 is performed.

18. A communication system, comprising a first communication apparatus and a second communication apparatus, wherein the first communication apparatus is configured to perform the method according to any one of claims 1 and 3 to 9, and the second communication apparatus is configured to perform the method according to any one of claims 2 to 9.

FIG. 1

| First communication apparatus | | Second communication apparatus |
|---|---|---|

Generate a PPDU, where the PPDU may include a data field, pilot values carried on pilot subcarriers corresponding to the data field are determined based on a bandwidth of the PPDU and Nss groups of initial pilot values, at least two groups of initial pilot values in the Nss groups of initial pilot values are different, and each group of initial pilot values may include M initial pilot values

201

202

PPDU

203

Parse the PPDU

FIG. 2

| Legacy short training field L-STF | Legacy long training field L-LTF | Legacy signal field L-SIG | Repeated legacy signal field RL-SIG | Universal signal field U-SIG | Ultra-high reliability signal field UHR-SIG | Ultra-high reliability short training field UHR-STF | Ultra-high reliability long training field UHR-LTF | Data field Data | Packet extension PE |
|---|---|---|---|---|---|---|---|---|---|

FIG. 3a

| Legacy short training field L-STF | Legacy long training field L-LTF | Legacy signal field L-SIG | Repeated legacy signal field RL-SIG | Universal signal field U-SIG | Integrated millimeter wave signal field IMMW-SIG | Integrated millimeter wave short training field IMMW-STF | Integrated millimeter wave long training field IMMW-LTF | Data field Data | Packet extension PE |
|---|---|---|---|---|---|---|---|---|---|

FIG. 3b

| | | | | | | | | | | | |
|---|---|---|---|---|---|---|---|---|---|---|---|
| | ... | | ... | | ... | ... | ... | ... | ... | ... | ... |

−32     −22     −16    −10    −4   0   4    10    16    22    31

Guard
subcarrier

Direct current
subcarrier

Guard
subcarrier

FIG. 4a

−64   −48 −40 −32 −24 −16 −8   0   8  16 24 32 40 48   63

Guard
subcarrier

Direct current
subcarrier

Guard
subcarrier

FIG. 4b

−128 −104 −91 −78 −65 −52 −39 −26 −13 0  13  26  39  52  65  78  91 104 127

Guard
subcarrier

Direct current
subcarrier

Guard
subcarrier

FIG. 4c

−256  −209  −187  −165  −143  −121  −99  −77  −55  −33  −11  0  11  33  55  77  99  121  143  165  187  209  255

Guard
subcarrier

Direct current
subcarrier

Guard
subcarrier

FIG. 4d

−256 −230 −210 −190 −170 −150 −130 −110 −90 −70 −50 −30 −10 0 10 30 50 70 90 110 130 150 170 190 210 230 255

Guard subcarrier

Direct current subcarrier

Guard subcarrier

FIG. 4e

EP 4 770 189 A1

501

Processing module

502

Transceiver module

Communication apparatus

FIG. 5

60

610

Transceiver

620

Processor

640

630

Memory

FIG. 6

701

Logic circuit

702

Interface

Chip

FIG. 7

## INTERNATIONAL SEARCH REPORT

| International application No. |
|---|
| **PCT/CN2024/118526** |

**A.    CLASSIFICATION OF SUBJECT MATTER**

H04W28/06(2009.01)i

According to International Patent Classification (IPC) or to both national classification and IPC

**B.    FIELDS SEARCHED**

Minimum documentation searched (classification system followed by classification symbols)

IPC:H04W

Documentation searched other than minimum documentation to the extent that such documents are included in the fields searched

Electronic data base consulted during the international search (name of data base and, where practicable, search terms used)

CNTXT, VCN, DWPI, CNKI, IEEE, 3GPP: 导频, 值, 子载波, 副载波, 音调, 初始, 基本, 序列, 空间流, 空时流, 带宽, pilot, value, subcarrier, initial, PPDU, bandwidth, sequence, tone

**C.    DOCUMENTS CONSIDERED TO BE RELEVANT**

| Category* | Citation of document, with indication, where appropriate, of the relevant passages | Relevant to claim No. |
|---|---|---|
| Y | US 2020067646 A1 (INTEL IP CORP.) 27 February 2020 (2020-02-27) description, paragraphs 0132 and 0222-0306 | 1-18 |
| Y | US 2017034829 A1 (QUALCOMM INC.) 02 February 2017 (2017-02-02) description, paragraphs 0016 and 0091 | 1-18 |
| A | CN 107465640 A (ZTE CORP.) 12 December 2017 (2017-12-12) entire document | 1-18 |

☐ Further documents are listed in the continuation of Box C.      ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **12 December 2024** | **23 December 2024** |

| Name and mailing address of the ISA/CN | Authorized officer |
|---|---|
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2024/118526**

| Patent document cited in search report | | | Publication date (day/month/year) | Patent family member(s) | | | Publication date (day/month/year) |
|---|---|---|---|---|---|---|---|
| US | 2020067646 | A1 | 27 February 2020 | US | 2021281362 | A1 | 09 September 2021 |
| | | | | WO | 2018175722 | A1 | 27 September 2018 |
| | | | | US | 2023224080 | A1 | 13 July 2023 |
| | | | | US | 2023188258 | A1 | 15 June 2023 |
| US | 2017034829 | A1 | 02 February 2017 | CA | 2989655 | A1 | 09 February 2017 |
| | | | | WO | 2017023553 | A1 | 09 February 2017 |
| | | | | TW | 201707393 | A | 16 February 2017 |
| | | | | IN | 201747044818 | A | 29 December 2017 |
| | | | | KR | 20180035818 | A | 06 April 2018 |
| | | | | EP | 3329630 | A1 | 06 June 2018 |
| | | | | ID | 201807956 | A | 27 July 2018 |
| | | | | JP | 2018523941 | A | 23 August 2018 |
| | | | | BR | 112018002104 | A2 | 18 September 2018 |
| | | | | CN | 108781145 | A | 09 November 2018 |
| | | | | CN | 110784298 | A | 11 February 2020 |
| | | | | IN | 202448046649 | A | 12 July 2024 |
| CN | 107465640 | A | 12 December 2017 | WO | 2017206963 | A1 | 07 December 2017 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202311194755